(19) **Europäisches Patentamt**

**European Patent Office**

**Office européen des brevets**

(11) **EP 0 858 584 B1**

(12) **EUROPEAN PATENT SPECIFICATION**

(45) Date of publication and mention
of the grant of the patent:
**20.04.2005 Bulletin 2005/16**

(51) Int Cl.[7]: **G01C 19/02**, G01P 9/02,
G01C 19/42

(21) Application number: **96945919.7**

(22) Date of filing: **11.10.1996**

(86) International application number:
**PCT/US1996/016216**

(87) International publication number:
**WO 1997/014934 (24.04.1997 Gazette 1997/18)**

(54) **OSCILLATING GYROSCOPE**

OSZILLATIONSKREISEL

GYROSCOPE OSCILLANT

(84) Designated Contracting States:
**AT BE CH DE DK ES FI FR GB GR IE IT LI LU MC
NL PT SE**

(30) Priority: **16.10.1995 US 551878
16.10.1995 US 543776**

(43) Date of publication of application:
**19.08.1998 Bulletin 1998/34**

(73) Proprietor: **Milli Sensor Systems and Actuators,
Inc.
West Newton, MA 02165 (US)**

(72) Inventors:
• **SAPUPPO, Michele, S.
Andover, MA 01810 (US)**

• **REED, Thomas, E.
Charlton, MA 01501 (US)**
• **CARDARELLI, Donato
Medfield, MA 02052 (US)**

(74) Representative: **Jones, Graham H.
Graham Jones & Company
Blackheath
77 Beaconsfield Road
London SE3 7LG (GB)**

(56) References cited:
US-A- 3 456 513    US-A- 3 477 298
US-A- 3 587 330    US-A- 3 616 699
US-A- 4 275 605    US-A- 4 598 585

**Description**

FIELD OF INVENTION

This invention relates to operational and design variations of a Pendulous Oscillating Gyroscopic Accelerometer (POGA), and a pendulous oscillating gyroscope and accelerometer that provides acceleration and gyroscopic rate information from a single instrument. It also relates to an amplitude oscillating gyroscope that provides rate information.

BACKGROUND OF INVENTION

The gyroscopic integrating accelerometer was first disclosed in U.S. Patent No. 1,904,387, "Gyroscopic Pendulum". The gyroscopic integrating accelerometer has a purposely unbalanced spinning gyroscope wheel that develops pendulous torque when it is accelerated along the input axis. The device then develops gyroscopic torque to balance out the pendulous torque. The angle of precession is proportional to the integral with respect to time of the acceleration along the input axis. Accordingly, by detecting the change in angle of the spin axis, which is allowed via an intermediary torque summing member, the device is useful for determining acceleration along the input axis. The integration characteristic is a result of the viscous damping of the torque summing member. The latest version of this design is commonly known as the Pendulous Integrating Gyroscopic Accelerometer (PIGA).

Inertial guidance units require three accelerometers and three axes of gyroscopic attitude information in order to measure the specific forces within a known coordinate frame. All present inertial guidance units require three accelerometers and either 2, two-axis gyroscopes, or 3, single degree of freedom gyroscopes.

In all strategic missile applications, ICBMs and SLBMs, the accelerometers are gyroscopic and require compensation from attitude rates which are obtained from separate gyroscopic instruments, either two or three per system.

Gyroscopic accelerometers, such as the Pendulous Integrating Gyroscopic Accelerometer (PIGA) or Specific Force Integrating Receiver (SFIR), have a rate error associated with angular motion about their input axes. This must be compensated by the angular detection of this rate by the inertial grade gyroscopes that are also part of the inertial guidance unit. Thus, inertial guidance units are complex, expensive, heavy systems that are relatively prone to error due to their complexity.

SUMMARY OF THE INVENTION

The POGA is a pendulous gyroscopic accelerometer that develops gyroscopic torque to balance pendulous torque by oscillating a momentum mass about the reference axis and oscillating the servo driven member about the servo axis. The planar designs allow the fabrication of the instrument using planar technologies such as millifabrication and microfabrication as well as the traditional machining.

The Pendulous Oscillating Gyroscopic Accelerometer (POGA) was first specified in U.S. Patent Number 5,457,993. The patent disclosure applies to traditional three dimensional design and fabrication. It also applies to one planar configuration that can be designed and fabricated using planar methods.

The POGA consists of three members connected so that they are allowed to rotate about three orthogonal axes, and a fixed member that is attachable to the vehicle or system. They may be called, the Rotor Driven Member (RDM), the Torque Summing Member (TSM), the Servo Driven Member (SDM) and the case or housing, respectively. The RDM is the angular momentum generator also referred to as the momentum mass. The TSM is the purposely mass-unbalanced member (pendulum) which rotates in response to acceleration-induced torque. Since the TSM carries the RDM, the mass imbalance can also fully or partially be along the RDM axis. The TSM also reacts to gyroscopic torque. The two torques are thereby added on the TSM to cancel. The SDM is so-called because it is the member which is oscillated to provide the counterbalance torque at the TSM so as to servo the TSM back to null (balanced position). The case or housing are the means to contain the instrument, attach it to the system or vehicle, and to allow a surface against which to actuate the SDM.

The order of connection starts with the RDM as the innermost member, connected to the TSM, which connects to the SDM, which in turn connects to the outermost member, the case.

The rotation axes for the three moving members are called: the reference axis for the RDM, the output axis for the TSM and the servo axis for the SDM. The accelerometer input axis will depend on the design configuration and the position placement of the unbalance on the TSM.

The three dimensional PIGA design consists of members which are in cylindrical form. The reason is that the RDM and SDM members need to continuously rotate. The planar designs of the POGA emerged since the members are oscillated through a small angle, and therefore can take shapes other than cylinders. Since the members are not cylindrical they can also be oriented to optimize the efficiency of the actuators driving them. The mode of assembly becomes the stacking of parts.

The first planar design features the oscillation of the RDM in the plane. The second and third planar designs feature the rotation of the TSM in the plane and the SDM in the plane, respectively. All three planar designs will allow the full set of disclosed options in the drive of the oscillators and the detection of their movements. The first such design is also disclosed in U.S. Patent Number 5,457,993.

The description of the POGA in U.S. Patent Number 5,457,993, including the three dimensional and first planar design, is limited in its operability. It does not include the servo of the TSM to null by way of a frequency change. It does not include the servo of either the RDM oscillation amplitude or the SDM amplitude, or both, as a means to maintain the TSM at null. It does not fully specify the options for drive frequency selection, pick-off selections, and actuation selections.

It is therefore an object of this invention to provide a second planar design which features these movements: RDM in and out of the plane, TSM in the plane and the SDM in and out of the plane.

It is a further object of this invention to provide a third planar design which features these movements: RDM in and out of the plane, TSM in and out of the plane and the SDM in the plane.

It is a further object of this invention to include non-cylindrical forms for the moving members.

It is a further object of this invention to consider the planar designs as consisting of a set of planar entities (layers) which can be stacked to form the instrument.

It is a further object of this invention to consider the stacked instrument as a flat pack design.

It is a further object of this invention for the stacked design to result in a completed packaged instrument.

It is a further object of this invention to provide an extensive set of options for the manner in which the RDM and SDM are driven and the manner in which their motion and that of the TSM are detected.

It is a further object of this invention to design the instrument to take advantage of the dynamics of moving parts to reduce the power required to operate. This includes low resistance to movement as well as operating at or near resonance.

It is an object of this invention to scale the members in order to trade off performance with size and power.

It is an object of this invention to include conventional fabrication and design technologies as well as milli and micro-fabrication technologies.

It is an object of this invention to utilize millifabrication technology as an extension of microfabrication technologies to larger sizes for greater performance.

It is an object of this invention to provide a frequency change as a feedback to provide servo for the TSM rebalance torque.

It is a further object of this invention to provide amplitude change from either the RDM or the SDM or both as a feedback to provide servo for the TSM rebalance torque.

This invention features a generally planar gyroscopic device of the type having a fixed case, a torque summing member coupled to the case and adapted for rotation about an output axis, a rotor driven member mounted to the torque summing member for sinusoidal oscillation about a reference axis that is orthogonal to the output axis, first oscillation means for oscillating the rotor driven member about the reference axis, the oscillation having a first phase, a first amplitude, and a first frequency, measurement means for determining the rotational motion of the torque summing member about the output axis caused by the rotation of the device about an input axis that is orthogonal to both the output axis and the reference axis, and means, responsive to the measurement means, for determining rotation of the device about the input axis. The device is characterized by the torque summing member and the rotor driven member both being generally planar and lying generally in a plane, and the torque summing member being mounted to the case such that the output axis is normal to the plane defined by the reference and input axes.

The rotor driven member may be pivotably mounted within the torque summing member, to pivot about the reference axis. The torque summing member may be mounted by a plurality of spaced flexures to the fixed case, and the output axis may be normal to the torque summing member, whereby the torque summing member pivots within its plane about the output axis. The means for determining rotation may be further responsive to the oscillation means. The means for determining rotation may include a phase-sensitive demodulator for producing a signal related to the angular rate of rotation of the device about the input axis.

The device may further comprise control means for altering the oscillation means to maintain the rotor driven member oscillation amplitude constant. The device may further comprise a generally planar servo driven member mounted to the case for sinusoidal oscillation about an accelerometer servo axis, wherein the torque summing member is mounted to the servo driven member. The device may further comprise a pendulosity carried by at least one of the torque summing member and the rotor driven member, to create a mass imbalance about the output axis, in which pendulosity torque due to acceleration along the accelerometer input axis causes a DC rotation of the torque summing member about the output axis.

The device may further comprise second oscillation means for sinusoidally oscillating the servo driven member about the servo axis, the oscillation having a second amplitude, a second frequency, and a second phase. The device may further comprise control means, responsive to the measurement means, for altering the oscillation caused by at least one of the first and second oscillation means, to create a change in the gyroscopic torque, to counterbalance pendulosity torque. The device may further comprise means, responsive to the control means, for determining acceleration of the device along the accelerometer input axis. The servo driven member may surround the torque summing member, and be pivotably mounted to the case to pivot about the servo axis.

DC rotation of the fixed case about the gyroscopic input axis may create a gyroscopic torque, which causes in part an AC oscillation of the torque summing member about the output axis. The servo driven member, the torque summing member and the rotor driven member may be three-dimensional members. The first frequency and second frequency may be the same. The phase difference between the oscillations of the rotor driven member and the servo driven member may be constant, and the control means may alter at least one of the first and second amplitudes. The control means may maintain the first and second amplitudes constant and alter the phase difference between the first phase and the second phase. The control means may maintain the first and second amplitudes constant, maintain the phase difference between the first phase and the second phase constant, and alter both the first and second frequencies together. The servo driven member and the rotor driven member may both be oscillated at resonance. The first and second oscillation means may be selected from the group consisting of electromagnetic drives and electrostatic drives. The measurement means may be a non-contact measurement device selected from the group consisting of capacitive, electromagnetic and optical measurement devices.

It is therefore another object of this invention to reduce the size, weight, complexity, and cost of an inertial guidance system by supplying angular rate information from the system accelerometer.

It is a further object of this invention to supply rate information from a Pendulous Oscillating Gyroscopic Accelerometer (POGA) without instrument modification, except for signal processing electronics.

It is a further object of this invention to eliminate two to three gyroscopic elements previously necessary in inertial guidance systems.

It is a further object of this invention to allow the extraction of angular rate about an axis independent of accelerations of the device, without interfering with accelerometer operation.

It is a further object of this invention to provide a simple Amplitude Oscillating Gyroscope (AOG).

This invention also results from the further realization that an angular rate about the POGA Servo Driven Member (SDM) axis produces an output signal that is unique and independently extractable without affect of or on the acceleration output signal.

The advantages to be gained from the use of the POGA with the addition of a rate sensing capability, in an inertial system, are as follows:

1. It reduces the number of instruments from six to three.
2. It reduces the number of instrument types from two to one, a distinct advantage in development, qualification, acquisition, and maintenance.
3. It synchronizes all inertial information with a common frequency, minimizing data latency problems.
4. It eliminates attitude and acceleration vector misalignments. This simplifies the dynamic calibration when used with external sensors.
5. It significantly reduces the amount of support electronics.

The POGA can be used as a multi-sensor, with outputs indicating both acceleration and rotation about appropriate axes, by adding to the POGA a phase sensitive demodulator which is referenced to the oscillating frequency and that has the POGA output axis angular position signal as an input to produce a signal linearly related to the angular rate about the POGA SDM axis. The demodulator required for the extraction of angular rate signals can be of any design that produces a component of output proportional to the content of the input in phase with the demodulator reference.

BRIEF DESCRIPTION OF THE DRAWINGS

Other objects, features and advantages will occur to those skilled in the art from the following description of the preferred embodiments and the accompanying drawings, in which:

Fig. 1 is a general diagram used to define the symbols used in this patent application;
Figs. 2A through 2C are schematic diagrams of three different embodiments of a pendulous oscillating gyroscopic accelerometer, all planar or flat-pack designs. The designs can also be made in the three dimensional form in which one or more of the moving members is another shape such as cylindrical;
Fig. 3 is an exploded view of a flat-pack design of the embodiment shown in Fig. 2C;
Figs. 4A through 41 are more detailed schematic drawings of the different layers of the design of Fig. 3;
Fig. 5 is a schematic block diagram of an operating accelerometer useful for understanding this invention using phase feedback operation;

Fig. 6 is a similar diagram using amplitude feedback operation;

Fig. 7 is a similar diagram using frequency feedback operation with constant phase and amplitude;

Fig. 8 is a similar diagram using frequency feedback operation with constant amplitude.

Fig. 9 is a schematic similar to Fig. 2A for an embodiment of a multi-sensor that senses both acceleration and rate,

Fig. 10 is a block diagram of the electronics that need to be added to the disclosed POGA designs to use the POGA as a multi-sensor;

Figs. 11A, 11B and 11C are schematic diagrams similar to that of Fig. 9 for an Amplitude Oscillating Gyroscope (AOG) according to this invention, using techniques similar to those used in the POGA but without an accelerometer output;

Fig. 12 is a diagram similar to Figs. 5 through 8 for a manner in which a multi-sensor can be operated with phase feedback; and

Fig. 13 is a similar block diagram for a manner of operation of the Amplitude Oscillating Gyroscope of Figs. 11A, 11B and 11C.

## DESCRIPTION OF THE PREFERRED EMBODIMENTS

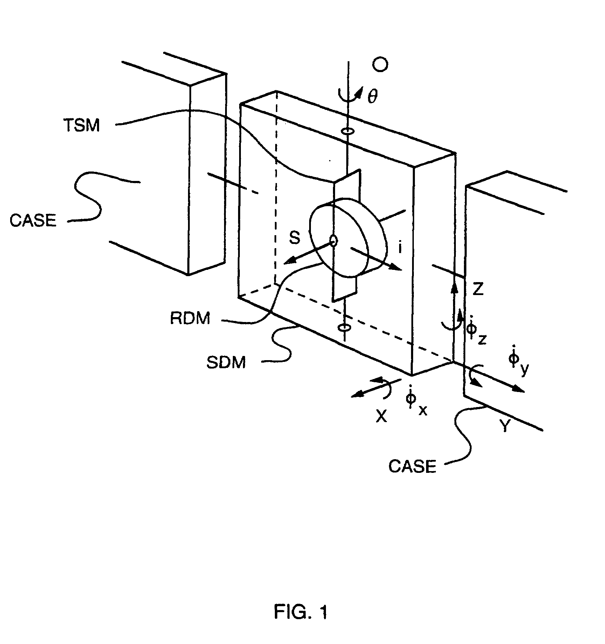

Fig. 1 is used to define the symbols used in the following analysis, in which the operation of the POGA is derived. All equations are grouped together below.

The fundamental equation applied to determine the TSM equation of motion (equation 1) is that the rate of change of angular momentum is equal to the applied torque. This is Newton's second law in rotational form. In equation 1 $(d\bar{H}|dt)_I$ represents the time rate of change of $\bar{H}$, the angular momentum vector, with respect to inertial space, while $\bar{L}$ represents the applied torque vector. Equation 1 will be applied to the TSM as per equation 2. Where $\bar{H}_f$ is the angular momentum of the TSM,

$$\left(\frac{\overline{dH_f}}{dt}\right)_f$$

is the time derivative of $\bar{H}_f$ relative to the $\hat{s}$, $\hat{i}$, $\hat{o}$ coordinate system, $\bar{\omega}$ is the angular velocity of the TSM or $\hat{s}$, $\hat{i}$, $\hat{o}$ coordinate system in inertial space, $\bar{\phi}$ is the angular velocity of the SDM or x, y, z coordinate system in inertial space, and the subscript "f" refers to the TSM.

The TSM angular momentum, $\bar{H}_f$, is shown in equation 3, where $\hat{s}$ is a unit vector in the $s$ direction.

The TSM angular momentum, $\bar{H}_f$, is the sum of the angular momentum of the oscillating rotor and that of the TSM which holds the rotor. An assumption is that there is no other motion of the rotor relative to the TSM.

$\bar{H}_r$ is the angular momentum of the rotor.

$\bar{I}$ is the moment of inertia tensor of the TSM.

To calculate equation 2 group by components, as shown in equations 4 through 6.

Since the TSM can only rotate about the $\hat{o}$ axis in the $s$, $\hat{i}$, $\hat{o}$ coordinate system, then only one torque component (about the $\hat{o}$ axis) is required for further analysis. The other torque components, $L_{fs}$ and $L_{fi}$, are cancelled by the pivot with which the TSM rotates.

There is one term left,

$$\left(\frac{d\bar{H}_f}{dt}\right)_I = L_{fo}\hat{o},$$

where $L_{fo}$ is defined in equation 7.

An assumption is made to simplify the analysis further by setting $I_i = I_s$ so that one term drops out. Equation 7 then becomes equation 8.

Since the TSM is subject to damping and spring forces (especially true for the POGA), then the torque can generally be written as shown in equation 9.

This is a phenomenological expression and also includes $L_e$ as a general error torque and $L_a$ as an applied torque. $L_a$ can be torque applied directly to the float as by pendulosity under the influence of acceleration.

By equating the torques of equations 8 and 9, equation 10 is derived.

Equation 10 is the equation of motion for the TSM. It is referred to as the output axis equation since it describes the angular motion, $\vartheta$, as a function of rotation about axis $y$.

But first further simplifications are made: 1. the non-linear term $H_r\vartheta\dot{\phi}_x$ is dropped for this illustration 2. $L_e$ is assumed zero; and 3. $I_o\ddot{\phi}$. is inconsequential since rotation of the SDM about $\hat{z}$ is not allowed by the pivot. The result is shown in equation 11.

For the POGA, the RDM and SDM are in oscillation, therefore $H_r$ and $\dot{\phi}_y$ are oscillatory, so their forms can be generally stated as in equation 12, where $\bar{\phi}_y$ is the amplitude of the SDM oscillation and $\delta$ is the relative phase between the RDM and SDM. The amplitude of the RDM can be expressed in a similar way as in equation 13, from which the RDM angular momentum can be obtained from the expression of equation 14. $\omega_y$ and $\omega_r$ are the frequencies of oscillation of the SDM and RDM respectively.

With the oscillation frequencies for the RDM and SDM set at the same value, the time dependence for the TSM , after reaching its steady state condition, consists of a DC displacement and a $2\omega$ oscillatory component as shown in equation 15. A($\omega$) and B($\omega$) are frequency dependent coefficients.

What has been derived is the frequency dependence of the output axis equation which describes the movement of the TSM. It is not desirable for the resonance frequency of the TSM to be at $2\omega$, since its DC motion is of most interest.

The first term, the DC term, gives the gyroscopic reactive term which is used to balance the pendulous torque. So, for the total torque to be zero, equation 16 must be followed. Equation 16 can be rewritten as equation 17, in which $m_p$ is the pendulous mass and $R_p$ the radius to the center of gravity of the pendulous mass and $\underline{a}$ is the acceleration magnitude. A solution for acceleration can be made to derive equation 18, where $m_r$ is the mass of the RDM and $R_r$ is the radius of the RDM for the case of a disk RDM.

The angle of rotation for the unrebalanced TSM corresponding to acceleration is given by equation 19 in which K is the spring constant of the TSM flexure. The angle can be related to acceleration by equation 20.

RDM EQUATION OF MOTION

Equation 21 is the equation of motion for the RDM that is flexurally mounted to the TSM subject to damping, $D_r$, and a spring constant $K_r$, where

$$L_r = \bar{L}_r \sin\omega_r t$$

and $\bar{L}_r$ is the drive torque amplitude applied to the rotor. Equation 22 is the form of the solution from which the phase is defined by equation 23, and the amplitude of the RDM oscillation is related to the drive torque by equations 24 and 25, where $I_r$ is the moment of inertia of the TSM about its rotational axis (the output axis), $L_r$ is the drive torque, $\omega_{ro}$ is the resonant frequency of the RDM, and $D_r$ is the damping coefficient of the RDM.

SDM EQUATION OF MOTION

The equation of motion for the SDM that is flexurally mounted to the housing or case subject to damping, $D_y$, and a spring constant, $K_y$, can be written as equation 27, where

$$L_y = \bar{L}_y \sin(\omega_y t),$$

and $\bar{L}_y$ is the drive torque amplitude applied to the SDM. And where

$$\phi_y(t) = \bar{\phi}_y \sin(\omega_y t - \varepsilon_y)$$

is the form of the solution from which the phase is defined by equations 28 and 29, and the amplitude of the SDM oscillation is given relative to the drive torque by equation 30, where $I_i$ and $J_y$ are the moment of inertia components of the TSM and SDM about the SDM oscillation axis, respectively.

The torque amplitude required to drive the SDM at a constant peak-to-peak angular deviation, given the frequency-dependent properties of the inertia/flexure problem, is given by equation 31.

Operability approaches

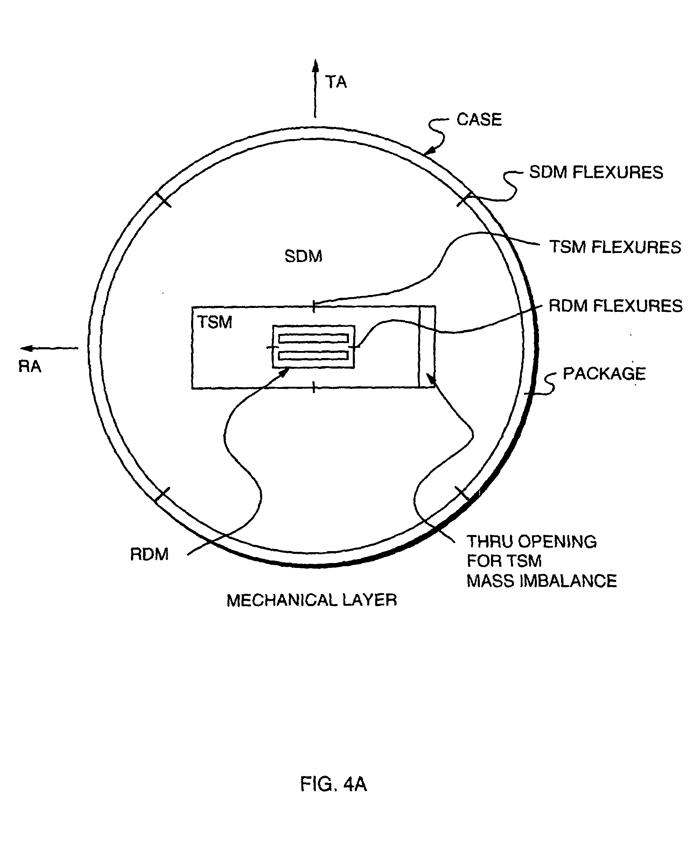

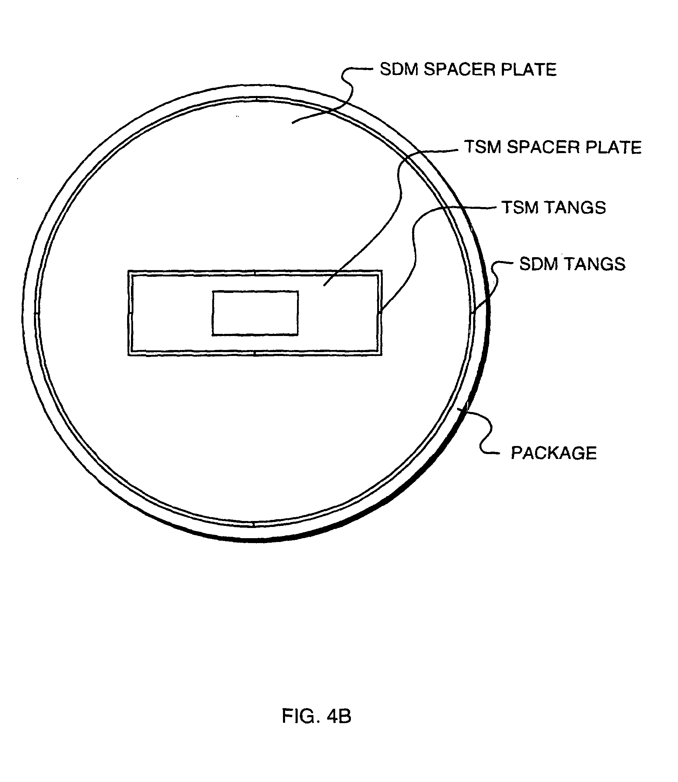

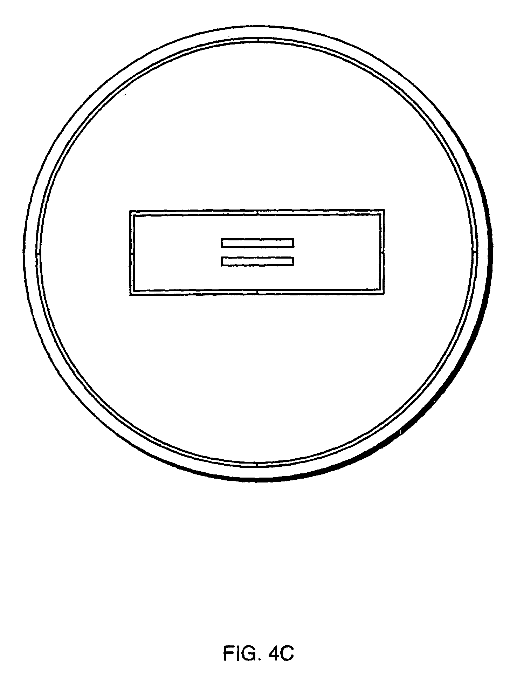

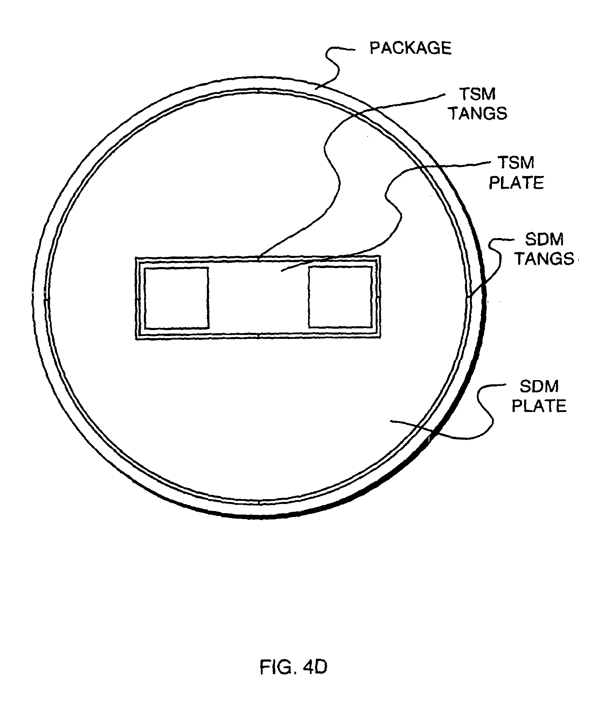

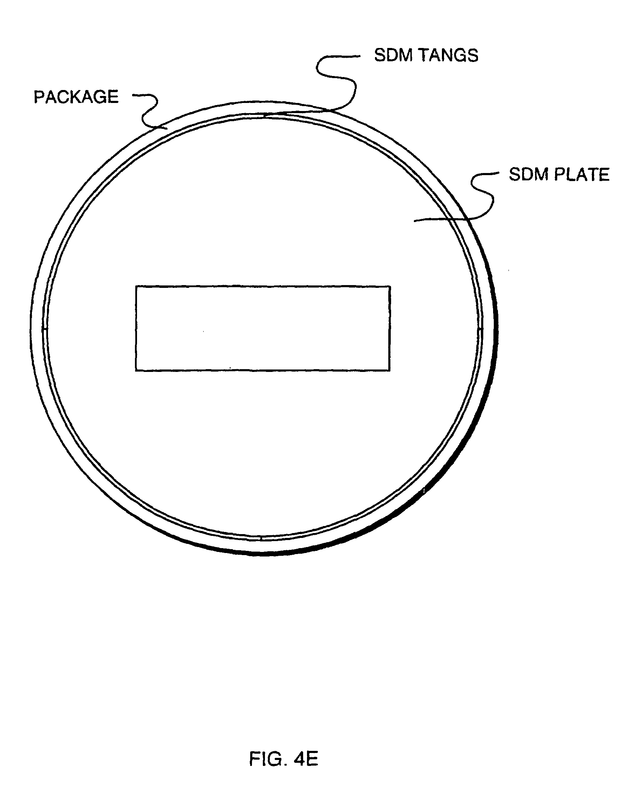

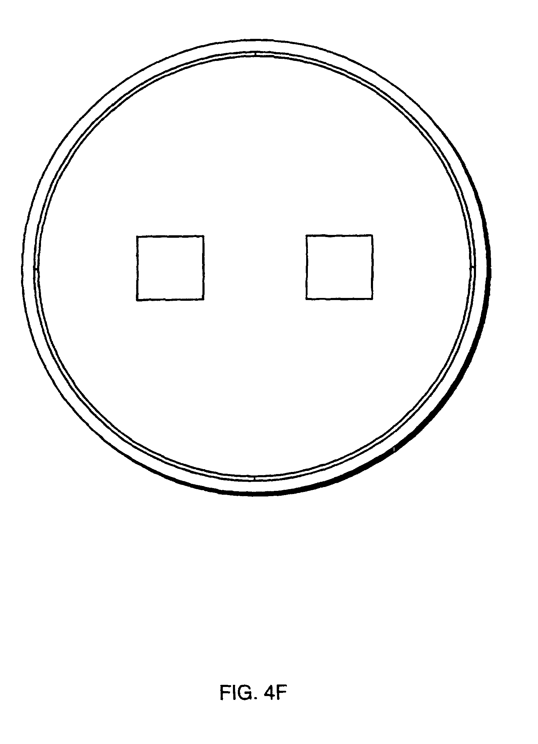

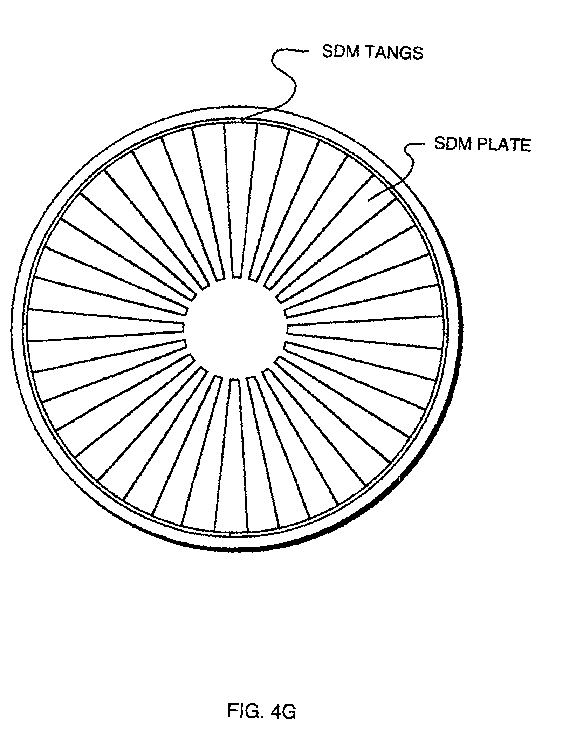

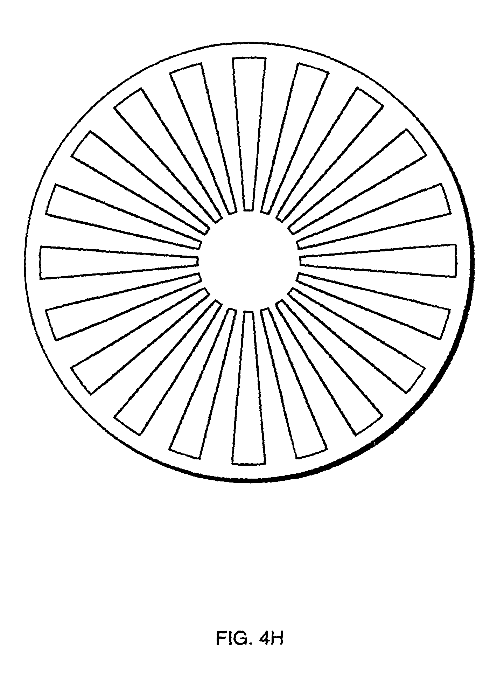

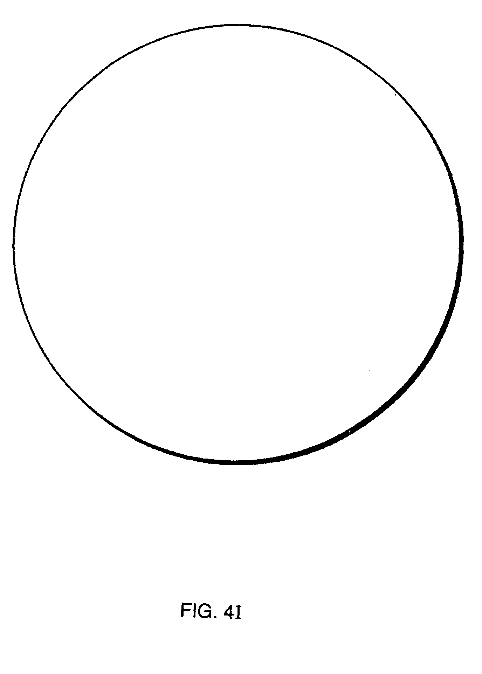

Since the pendulous torque is a DC term it is necessary for the analysis to produce a DC gyroscopic torque. This occurs for the case where the RDM and SDM oscillation frequencies are equal. In addition to the DC term, though, a $2\omega$ term is also present in the movement of the TSM. This result was expressed in the figures 4, 5, 6, and 7 of U.S.

Patent Number 5,457,993. The above mathematical analysis justifies the pictorials of those figures. The balance of the DC torques results in an expression for acceleration (equation 18) that relates acceleration to amplitudes, phases and frequencies that can be varied. The operability approaches refer to 1. varying the phase, 2. varying the amplitudes or 3. varying the frequency to balance the pendulous torque.

For the case where the phase is held constant and the amplitude of the SDM oscillation is varied to balance the acceleration-induced pendulosity, the RDM oscillation amplitude can also be varied. In fact, either or both may be varied. This approach yields a linear scale factor (proportionality) as given by the constant factor in the square parenthesis of equation 32 if only one amplitude is varied. For this approach, the maximum acceleration balanced on the TSM is limited by the geometry of the actuator, and the available power. They determine the maximum RDM and SDM amplitudes achievable. It is also maximum for $\delta=0$.

For the approach specified for which the amplitudes are kept constant and the $\delta$ phase is varied, the scale factor is a cosine function since the relationship between the phase and acceleration goes as the cosine of the difference of the phases. The maximum acceleration balanced on the TSM is bounded by $\delta=o$. The relationship is given by equation 33.

An additional approach in the way the instrument is operated is also derivable from the relation which specifies acceleration. The variation in gyroscopic torque can be generated by varying the common oscillation frequency of operation for the RDM and SDM. There are at least two cases or approaches for this means of operation. For the first the amplitudes and phases are kept constant while the common frequency is varied. The scale factor for this case is parabolic since it goes as $\omega^2$. In addition, this case would require a bias TSM deflection for zero acceleration since the scale factor only generates positive torques. The relationship is given by equation 34a. The maximum acceleration is achieved for $\delta=0$.

The second mode of operation using frequency feedback is based on the dynamic characteristics of the spring-restrained, damped SDM and RDM oscillators. The acceleration equation is more accurately written as shown in equation 34.

The scale factor which relates acceleration to oscillation frequency is a function of its place relative to the resonance frequencies of the RDM and SDM. Note that for this case both the amplitudes and phases vary over the frequency spectrum.

Any combination of the four means of operating the instrument are also possible. That is, a combination with either phase variable or fixed and with either amplitude fixed or varied and with the common frequency fixed or varied can be utilized.

Drive approaches

These include the approaches for the way that the RDM and SDM are driven. Since they are spring-restrained, damped oscillators, the RDM and the SDM can be operated at resonance by the adjustment of their inertias and flexural spring constants. The purpose for this selection is that resonance operation provides an oscillation amplitude for less power. The choices are: 1. The RDM and SDM are both operated at resonance; 2. The RDM is operated at resonance and the SDM is not; 3. the RDM is not operated at resonance and the SDM is; and 4. the RDM and SDM are not operated at resonance. It is also possible to control the degree of resonance by controlling the Q of the oscillators. This can provide a degree of flexibility in the way the instrument is operated as described in the previous section on operability approaches.

Actuation approaches

The RDM and SDM need to be actuated in order to oscillate. The location of the means by which this is done is varied. The optimum method is to locate the actuator for the RDM on the TSM. The optimum method for the SDM is to locate it on the fixed member, (the case or housing).

The means to actuate the RDM and the SDM may include electrostatic or electromagnetic approaches in any combination. These types of actuators are known in the field of millimachined motors.

The means also need to be employed to minimize the influences of each actuator on unintended members. Means also need to be employed to minimize the influence of the actuators on the TSM, as any such influence corresponds to an output error.

The direction of force for each actuator also depends on the mechanical configuration of the RDM and SDM. A transverse force may be necessary to oscillate an RDM or SDM that needs to oscillate in the plane. A normal force may be necessary to actuate an RDM or SDM that needs to oscillate in and out of the plane. A normal force is one that is directed perpendicular to the surface of the member.

Pick-off approaches

The TSM requires a pick-off to detect the rotational motion about the output axis in order for a feedback to maintain it at null. The pick-off design may be electrostatic, electromagnetic, optical or other, which may include other photonic approaches, etc., as known in the art of the detection of very small distances and/or angular changes.

The amplitudes and phases of the RDM and SDM also require control to maintain them constant in some of the operability approaches specified above. This is done through the detection of the oscillations. The means for doing so may include the same approaches as specified for the TSM above.

Design Variations

Because the POGA instrument requires oscillations instead of continuous motions for the RDM and SDM, the designs may utilize non-traditional, non-cylindrical shapes for the three members. This allows for the orientations of the members to be selected to take advantage of different actuator and pick-off designs and to improve the dynamics of their motions and reduce the power required to drive them. Three configurations exist. The first was disclosed in U. S. Patent Number 5,457,993. It featured an in-plane motion of the RDM. The second features the in-plane motion of the TSM. The third features the in-plane motion of the SDM. Each configuration will result in a different instrument. The second configuration allows the use of actuators which apply a normal force for both the RDM and SDM, while the third has in-plane motion of the SDM which is less subject to damping.

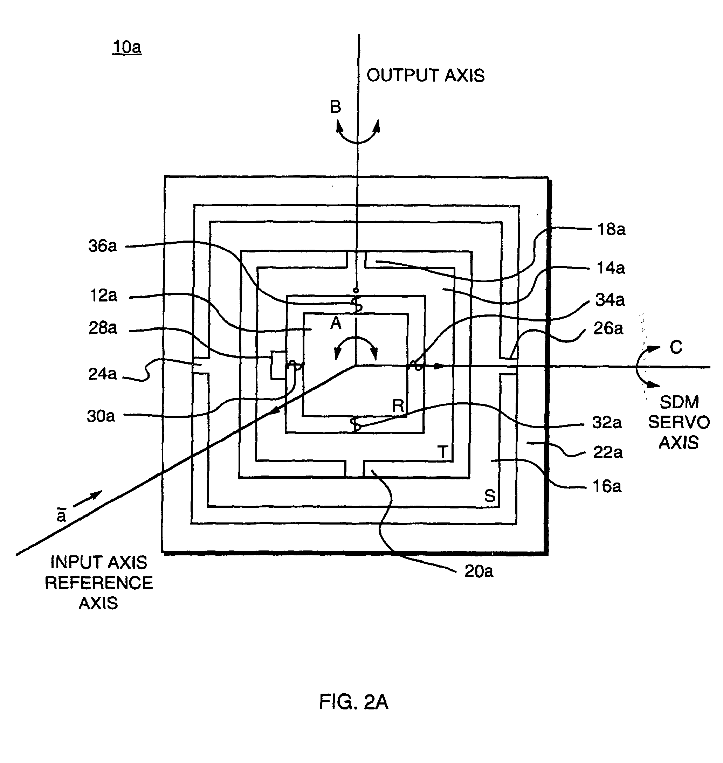

There is shown in Figure 2A a pendulous oscillating gyroscopic accelerometer 10a. Device 10a includes an RDM 12a that is oscillated about the reference axis as shown by arrow A. RDM 12a is pivotably mounted to the TSM 14a by mounts 30a, 32a, 34a, 36a. These mounts are representative of the particular design shown. Other approaches are also possible. RDM 12a rides within TSM 14a which itself is pivotably mounted to the SDM 16a by mounts 18a and 20a that allow member 14a to pivot about the output axis as shown by arrow B. SDM 16a is itself pivotably attached to fixed member (housing or case) 22a through mounts 24a and 26a. SDM 16a is oscillated about the SDM servo axis as shown by arrow C.

The pendulosity in this case is created by mass 28a that may be fixed to the RDM 12a and/or TSM 14a. In this case it is fixed to the TSM, and the input axis is thereby defined as being along the reference axis. The pendulosity is acted upon by a specific force a acting along the input axis. The TSM 14a rotates about the output axis, and a readout (not shown) measures the angle of rotation. A servo loop (not shown) provides a response to the RDM and/or SDM actuators (not shown) to vary the relative phases or the amplitudes of oscillation, or the common frequency of oscillation, to counterbalance the pendulosity torque. The phase difference, amplitudes or frequency change then become a measure of acceleration detected.

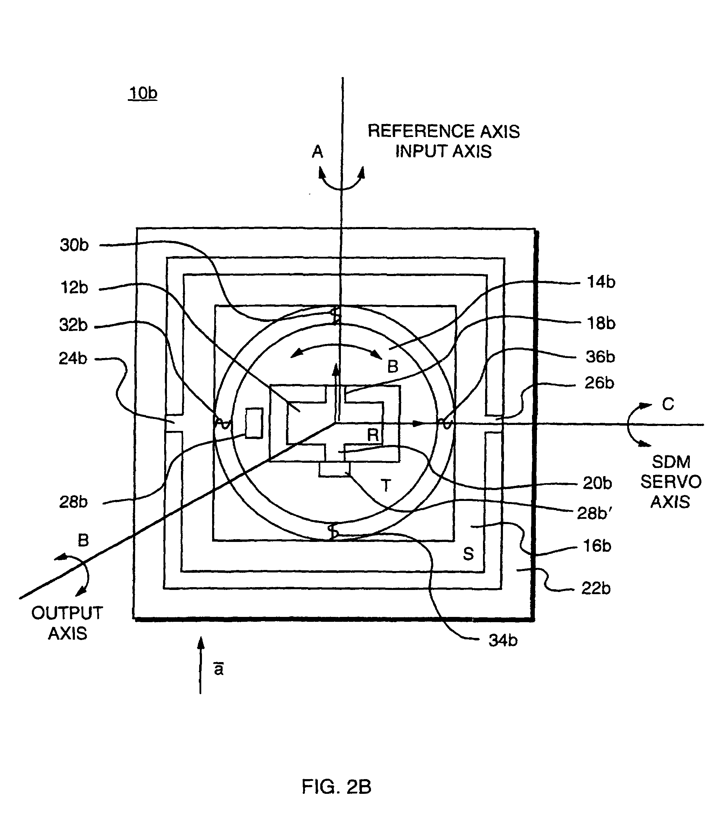

Fig. 2B is a schematic diagram of the second planar design of the pendulous oscillating gyroscopic accelerometer 10b. Device 10b includes an RDM 12b that is oscillated about the reference axis as shown by arrow A. RDM 12b is pivotably mounted to the TSM 14b by mounts 18b and 20b. RDM 12b rides within TSM 14b which itself is pivotably mounted to the SDM 16b by mounts 30b, 32b, 34b, 36b that allow member 14b to pivot about the output axis, in the plane, as shown by arrow B. These mounts are representative of the particular design shown. Other approaches are also possible. SDM 16b is itself pivotably attached to fixed member (housing) 22b through mounts 24b and 26b. SDM 16b is oscillated about the SDM servo axis as shown by arrow C.

The pendulosity in this case is created by mass 28b that is fixed to the TSM member 14b. The input axis is defined approximately as along the reference axis. If the pendulosity mass were placed at location 28b', the output axis would be along the SDM axis. Somewhere in between these two positions is also possible.

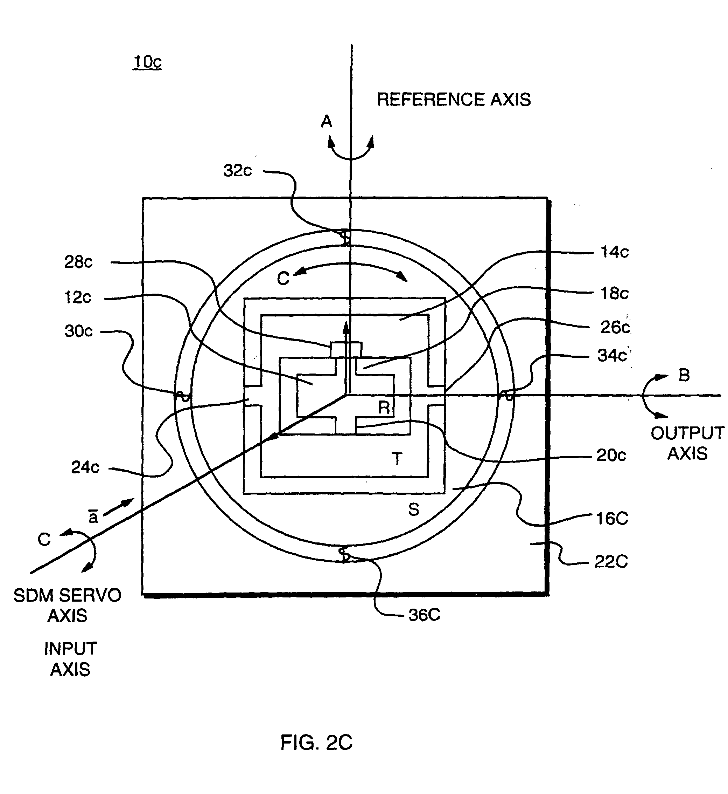

Fig. 2C is a schematic diagram of the third planar design of the pendulous oscillating gyroscopic accelerometer 10c. Device 10c includes an RDM 12c that is oscillated about the reference axis as shown by arrow A. RDM 12c is pivotably mounted to the TSM 14c by mounts 18c and 20c. RDM 12c rides within TSM 14c which itself is pivotably mounted to the SDM 16c by mounts 24c and 26c that allow member 14c to pivot about the output axis as shown by arrow B. SDM 16c is itself pivotably attached to fixed member (housing) 22c, through mounts 30c, 32c, 34c, 36c. These mounts are representative of the particular design shown. Other approaches are also possible. SDM 16c is oscillated about the SDM servo axis as shown by arrow C.

The pendulosity in this case is created by mass 28c that is fixed to the TSM 14c. The input axis is defined along the SDM servo axis.

The theory of operation of the different embodiments of the present pendulous oscillating gyroscopic accelerometer is the same as that illustrated by U.S. Patent Number 5,457,993, for the cases where: 1. the phase is held constant and the amplitudes are varied to generate the gyroscopic torque to balance the pendulous torque and 2. the amplitudes are held constant and the relative phase is varied. For 1. the amplitude change is related to the acceleration measured. For 2. the relative phase is related to the acceleration.

There are at least two modes of operation for the frequency feedback approach. For the first there is no dependence of the RDM and SDM oscillator amplitudes and phases on the frequency of operation, flat response. The scale factor does not give a change in sign for any value of frequency, however, and it goes as $\omega^2$. In order to provide a rebalance torque for positive and negative accelerations the TSM would have to have a natural, mechanical position that is offset from the geometric alignment with the other members in the plane. This would mean that by increasing the frequency from zero there will be a frequency that will torque the TSM into geometric alignment. This is the bias frequency. Now in reaction to an acceleration, the frequency will either increase or decrease from the bias position. The TSM mounts are always in a position of stress for this case since the read-out null is at the geometric null and not the mechanical null.

For the second mode of operation, the RDM and the SDM have phases and amplitudes that are a function of frequency. The inertias and spring constants are selected so that the resonance of the RDM or SDM or both are close to the frequency of operation. As the frequency is varied, the torque will vary according to a function specified by the resonance condition of the two oscillators. The function will pass through zero providing for rebalance torque for positive and negative accelerations. The output of this approach is a frequency change from the value at null position.

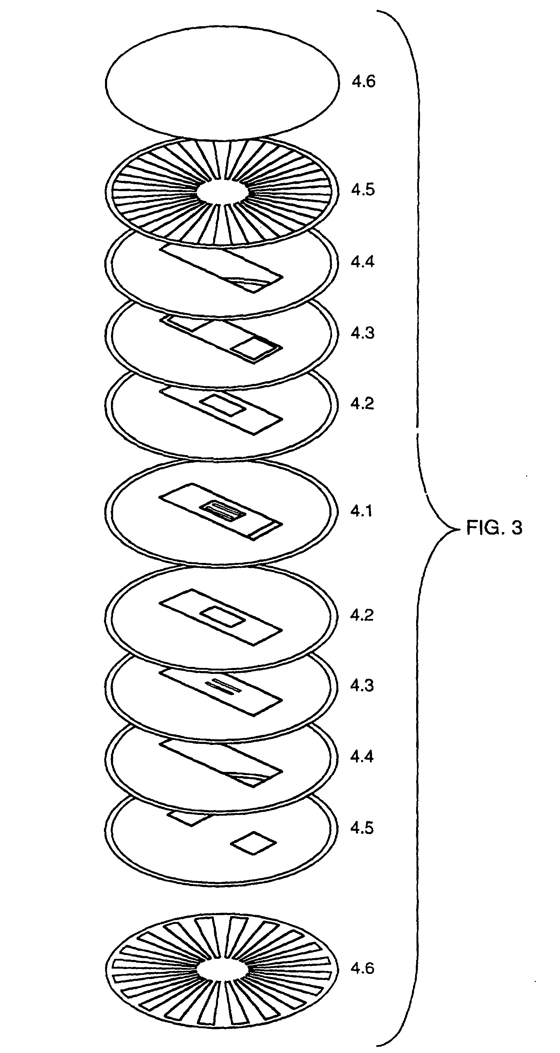

The third design shown in Fig. 2C has the SDM movement in the SDM plane. A practical, millimachinable design for this approach is indicated as a multi-layered, flat-pack as shown in Fig. 3 in exploded view. The layers are numbered 4.1-4.6. The same number for two layers indicates that they are of the same design. Fig. 2C illustrates in more detail the mechanical layer (layer 4.1) of Fig. 3.

Unlike the schematic descriptions of Figs 2A, 2B and 2C, the design of Fig. 3 represents the full configurational description with the inclusion of the actuators and the pick-offs. The outside concentric ring constitutes the outside package or case when all layers are stacked. This approach to design allows the different components to be in different layers so that they can be fabricated and optimized independently. With stacking the instrument is composed and fully packaged.

Layer-by-layer descriptions follow. Figure 4A shows layer 4.1, the mechanical layer. It contains four SDM flexures (holding the SDM to the case), in schematic form, an SDM, two TSM flexures, a TSM with pendulosity in the plane obtained by making the TSM dimension shorter on the right side, two RDM flexures and an RDM. The darkened plates on the RDM are capacitive actuator rotor plates used to drive the RDM. These are placed on both sides of the layer. The stators that drive the RDM are located on layer 4.3 (Fig. 4C). The SDM oscillates in the plane and the RDM in and out of the plane. The TSM turns in and out of the plane. It is sufficient to describe the operation of the POGA with just this layer. The other layers provide the drives and pick-offs.

Layers 4.2 (Fig. 4B) are RDM drive spacer layers. They are of sufficient thickness to form a cavity for the RDM to turn in when the layers are assembled. The layers contain four SDM tangs, an SDM spacer plate, four TSM tangs and a TSM spacer plate. The tangs are assembly aids which keep the parts together until assembly is made. The tangs are then removed so that the two plates can move with the corresponding TSM and SDM in the mechanical layer. The TSM and SDM spacer plates become part of the TSM and SDM. There is the option of depositing films directly to the thickness required instead of providing a separate layer. The criteria is whether the thickness can be deposited practically.

Layers 4.3 (Figs. 4C and 4D) are the SDM stator layers. Two views are shown since the two sides of the layers are different. Fig. 4C contains the RDM actuator stator which is used with the rotor actuator capacitive patterns of the RDM to drive the RDM. Fig. 4D contains the TSM pick-off capacitive patterns which work with corresponding patterns on layers 4.5 to detect the motion of the TSM. These layers (4.3) also contain the outside package, the SDM tangs, the SDM plate, the TSM tangs and the TSM plate. The same applies to these tangs and plates as were described for layers 4.2.

Layers 4.4 (Fig. 4E) are the TSM pick-off spacers. They are of sufficient thickness to allow the TSM to rotate when the layers are assembled. The layers also contain SDM tangs for assembly and an SDM plate. There is the option of depositing this layer directly if the thickness is within practical limits.

Layers 4.5 (Figs. 4F and 4G) are the SDM rotor layers. Two views are shown since the two sides of the layers are different. Fig. 4F contains two capacitive patterns for the detection of the TSM rotation. Fig. 4G contains the capacitive actuator rotor pattern for electrostatically driving the SDM in the plane. This representation is only illustrative and meant to imply that a pattern of this type may be used. The layers also contains the SDM tangs for assembly, the SDM plates, and the outer package.

Layers 4.6 (Figs. 4H and 4I) are the SDM stator actuator layers as well as the outside top and bottom covers of the package. Fig. 4H illustrates a typical electrostatic stator pattern. It would work with that on the layers 4.5 to drive the SDM to oscillate in the plane. Fig. 4I shows the cover surface.

Note that the TSM, RDM and SDM move within separate cavities.

In an alternate configuration the SDM flexures might be placed on the SDM rotor layers instead of the mechanical layer. All flexures are illustrative only, and indicate the allowed axes of rotation for the three members.

Although a flat-pack design is demonstrated in Fig. 3, a conventional three dimensional configuration using conventional machining could be pursued. This is also true for designs based on Figs. 2A and 2B. Three dimensional designs could have members whose surfaces are in three orthogonal planes as opposed to one as shown.

Operation Schematics

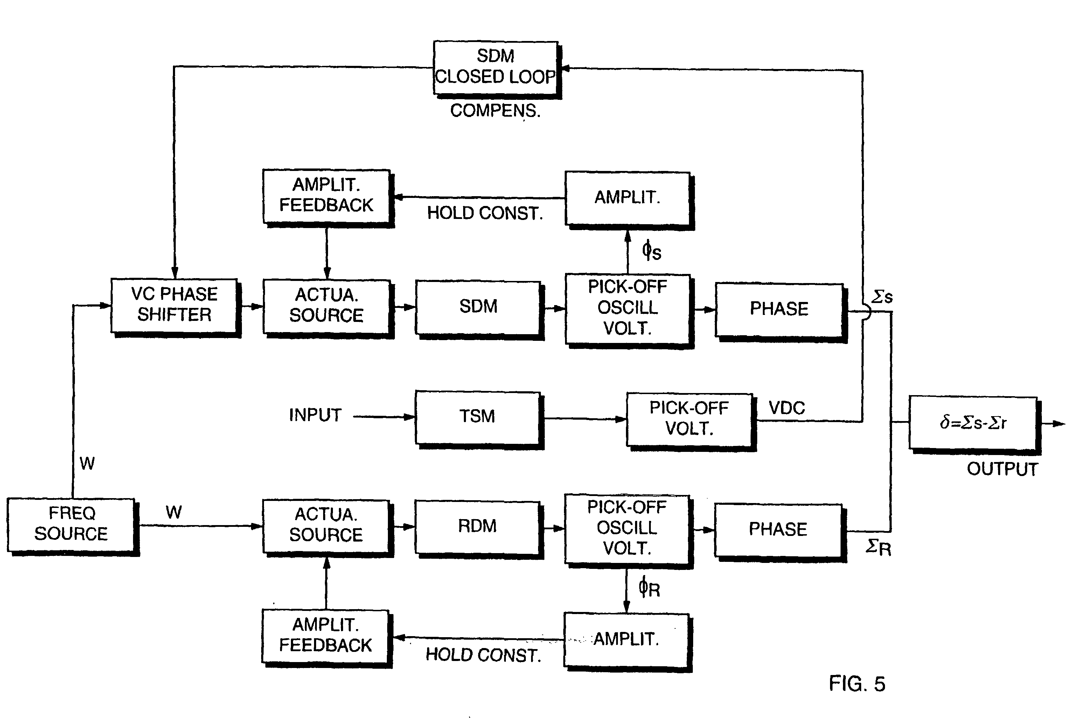

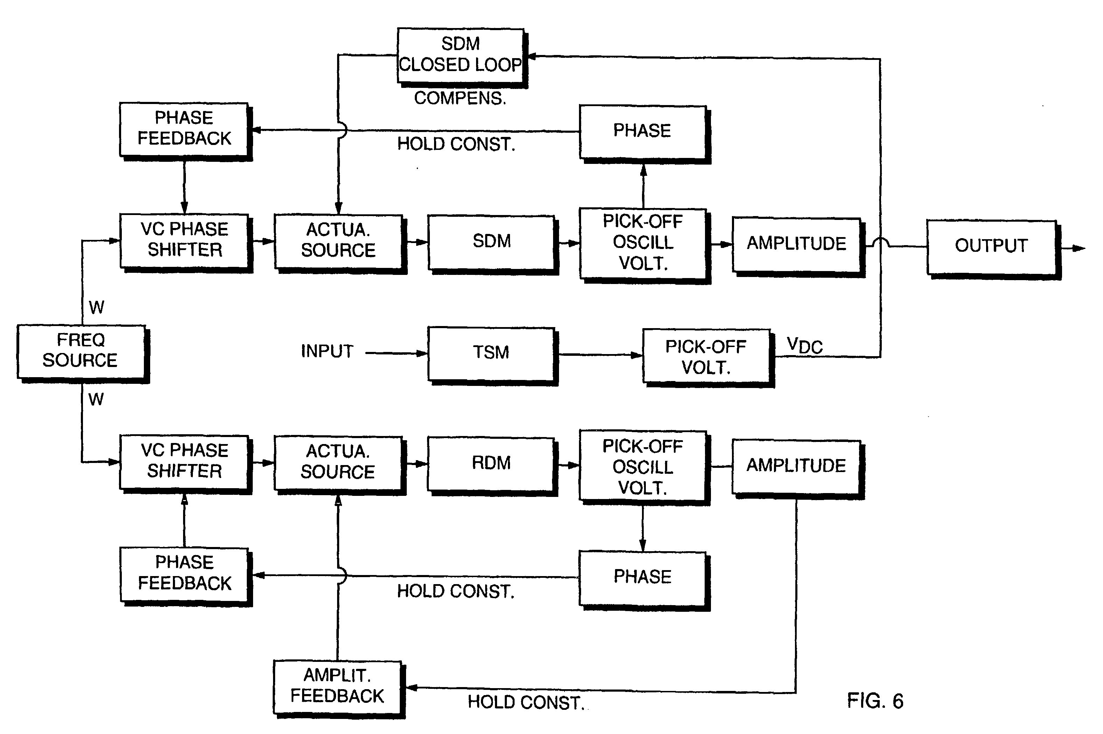

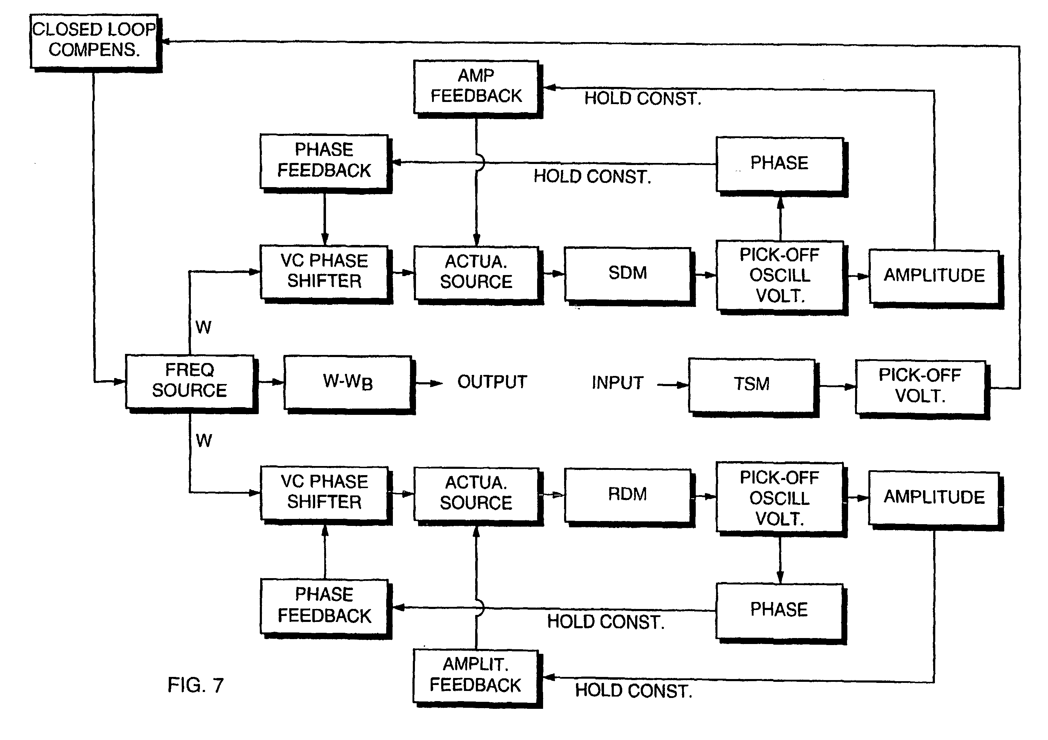

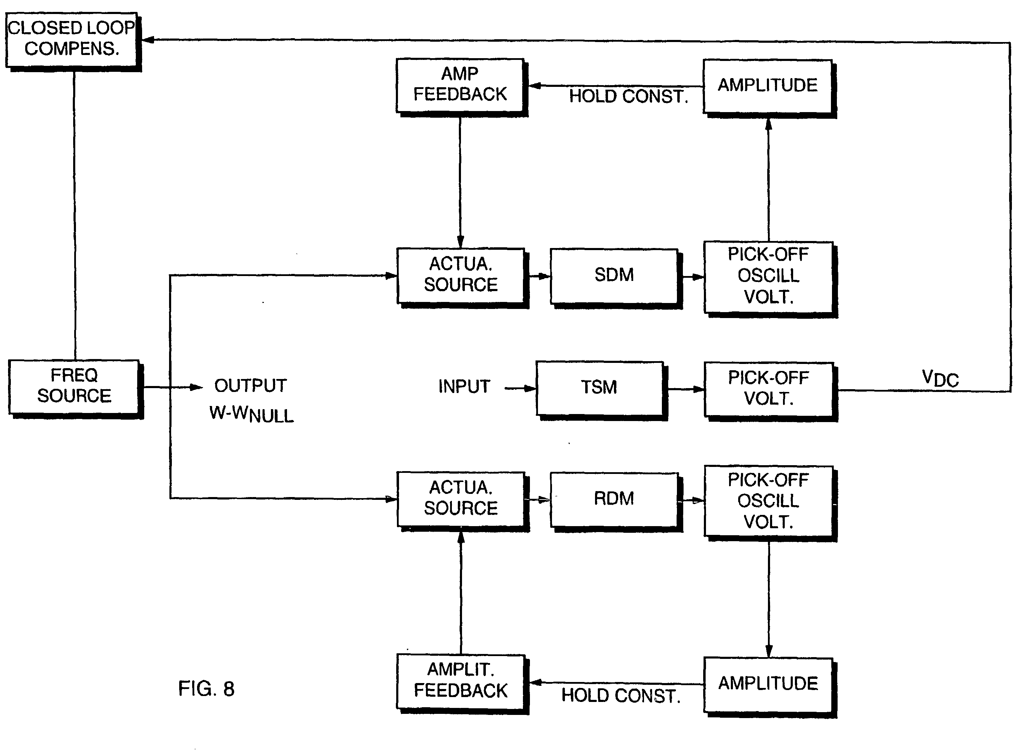

The schematic block diagram of Figs. 5 through 8 represent the modes of operation described above: phase feedback (Fig. 5), amplitude feedback (Fig. 6), frequency feedback with constant phase and amplitude (Fig. 7), and frequency feedback with constant amplitude (Fig. 8). These represent four of many possible ways of varying phase, amplitude and frequency to achieve gyroscopic torque according to equation 18.

Phase feedback (Fig. 5) assumes that the SDM and RDM are driven by actuation sources. A common frequency input is provided to both. A Voltage Controlled Phase Shifter is also utilized prior to the SDM actuator source so that its oscillation phase can be varied. The oscillations of the RDM and SDM are picked off and the resulting AC voltage signals are processed to obtain the peak amplitudes and phases of the signals. For the RDM and the SDM the amplitudes are fed back in control loops to the actuator sources to hold the amplitudes constant. Subject to input acceleration, the TSM deflects because of its pendulosity and a pick-off DC voltage is generated. The voltage level is then compensated and fed back to the VC Phase Shifter of the SDM to change its phase so that the TSM is driven back to null. When this condition is met, the phase difference between the phases extracted is the output. Note that the phase difference is 90 degrees for zero acceleration input.

Note that a variation of the phase feedback operation is for the feedback to be applied to the RDM instead of the SDM oscillation phase, or to both.

Amplitude feedback (Fig. 6) assumes that the SDM and RDM are driven by actuation sources. A common frequency input is provided to both. Since the phases (or the phase difference) are to be kept constant, VC Phase Shifters are provided for both so that they can be controlled. The oscillations of the RDM and SDM are picked off and the resulting AC voltage signals are processed to obtain peak amplitudes and phases of the signals. For the RDM and SDM, the phases are fed back in control loops to the VC phase shifters to hold the phases or the phase difference between them constant. The amplitude of the RDM is fed back in a control loop to the RDM actuator source to keep the RDM amplitude constant. Subject to input acceleration, the TSM deflects because of its pendulosity and a pick-off DC voltage is generated. The voltage level is compensated and fed back to the SDM actuator source to change its amplitude so that the TSM is driven back to null. When this condition is met, the amplitude of the SDM is the output. Note that the amplitude of the SDM oscillation is zero for zero acceleration input.

Note that a variation of the amplitude feedback approach is for the feedback to be applied to the RDM amplitude instead of the SDM. For this case, the RDM amplitude is zero for zero acceleration input. A second variation is for the feedback to be applied to both amplitudes. For this case, both amplitudes could be zero for zero acceleration input if the amplitudes are kept equal, although other combinations of amplitudes could be used.

Frequency feedback for the case where the amplitudes and phases of the RDM and SDM are kept constant (Fig. 7) requires two sets of control loops for the amplitudes and phases. SDM and RDM oscillators are driven by actuator sources whose inputs are phase controlled by VC Phase Shifters. A common frequency is provided to both. The oscillations of the RDM and SDM are picked off and the resulting AC voltage signals are processed for amplitudes and phases. The amplitudes are fed back in control loops to the actuator sources to maintain the amplitudes constant. The phases are fed back in control loops to the VC phase shifters to maintain the phases or phase difference constant. Subject to input acceleration, the TSM deflects because of its pendulosity and a pick-off DC voltage is generated. The voltage level is compensated and a voltage controlled oscillator (frequency source) is varied to bring the TSM back to null. When this condition is met, the frequency change from a null frequency value is the output. Zero acceleration corresponds to the frequency which will drive a biased TSM so that the TSM reaches geometric null (perpendicularity with the RDM and SDM axes). A biased TSM has an initial rotation in the absence of acceleration or gyroscopic torques.

Frequency feedback for the case where the amplitudes are constant (Fig. 8) requires control loops for the amplitudes. The SDM and RDM are driven by actuator sources. A common frequency is provided to both. The oscillations of the RDM and SDM are picked off and the resulting AC voltage signals are processed for amplitudes and phases. The amplitudes are fed back in control loops to the actuator sources to maintain the amplitudes constant. Subject to input acceleration, the TSM deflects because of its pendulosity and a pick-off DC voltage is generated. The voltage level is compensated and fed back to the frequency source to change the drive frequency to drive the TSM back to null. When this condition is met, the frequency change from a null value is the output. Zero acceleration corresponds to that frequency for which the gyroscopic torque is zero. This value depends on the dynamics of the RDM and SDM.

THEORY OF POGA MULTI-SENSOR OPERATION

The POGA consists of three members connected so as to be allowed to rotate about three orthogonal axes, and a fixed member that is attachable to the vehicle or system. They may be called, the Rotor Driven Member (RDM), the Torque Summing Member (TSM), the Servo Driven Member (SDM) and the case or housing, respectively. The order of connection is: RDM to TSM, TSM to SDM and SDM to case or housing.

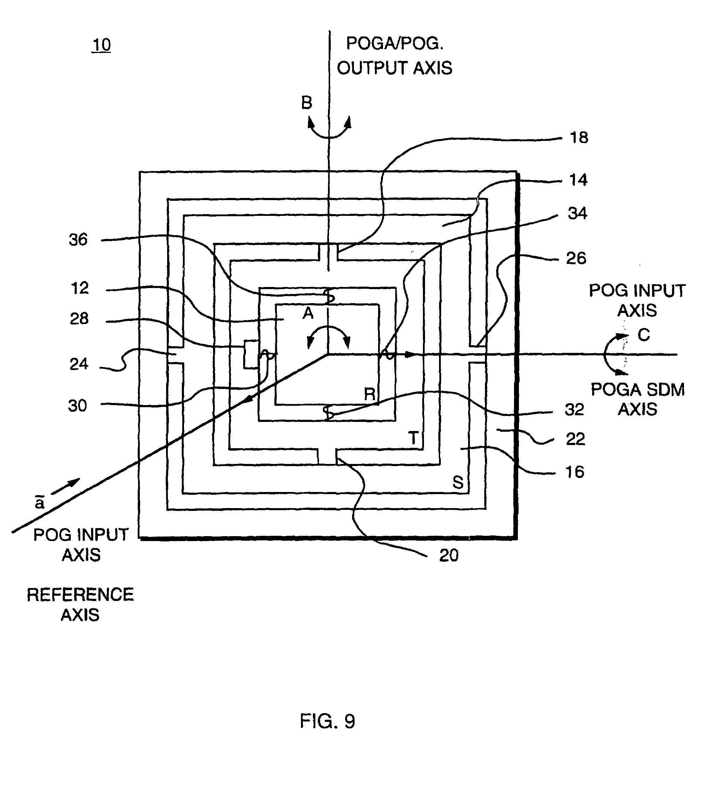

While this invention is compatible with all embodiments of the POGA disclosed in this application and in the patent incorporated herein by reference, the embodiment 10 shown in Fig. 9 will be used for describing the operation of the present POGA multisensor, in which the POGA has separate outputs for acceleration and rate.

The pendulosity in this case is created by mass 28 that may be fixed to RDM 12, and/or TSM 14 as shown. In this case it is fixed to the TSM, and the POGA input axis is thereby defined as being along the reference axis. The pendulosity is acted upon by a specific acceleration force a acting along the input axis. The TSM 14 rotates about the output axis and a read-out (not shown) measures the angle. A servo loop (not shown) provides a response to the RDM and/or SDM actuators (not shown) to vary the relative phases or the amplitudes of oscillation or the common frequency of oscillation to counterbalance the pendulosity torque. The phase, amplitude or frequency changes then become a measure of acceleration detected. The POGA, its embodiments and its operation are disclosed above.

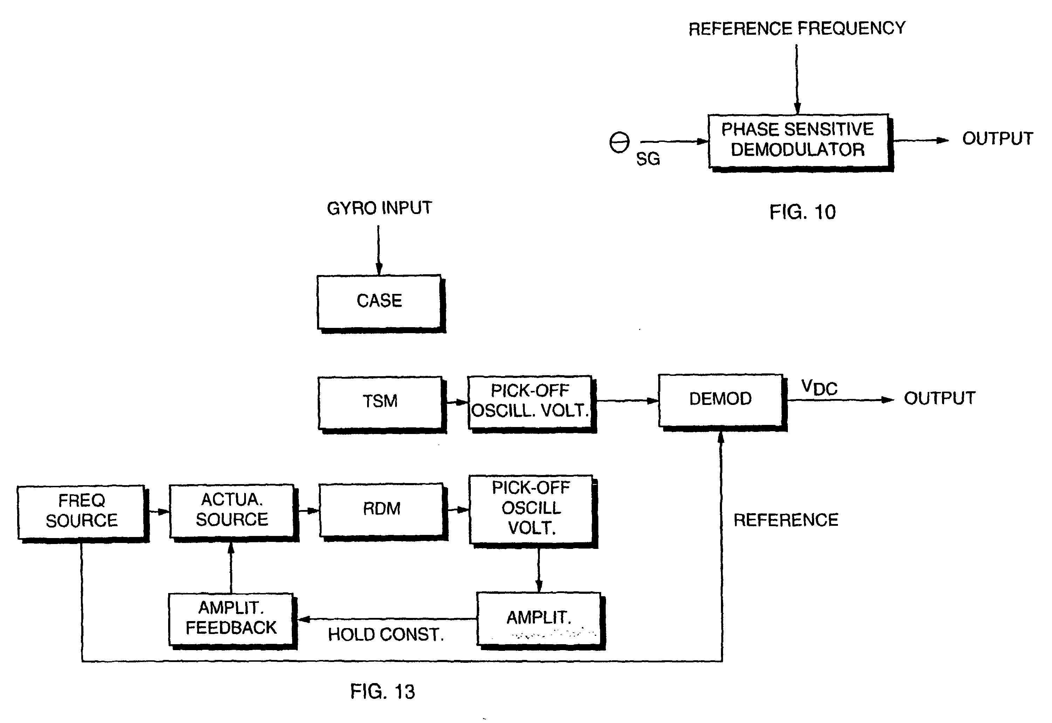

Any angular rate of POGA 10 about the POGA SDM axis will act upon the instantaneous angular momentum of the sinusoidally oscillating RDM to produce a sinusoidal torque on the TSM with a resulting oscillatory motion of the TSM about the output axis, termed $\theta_{SG}$. This motion will be at the same frequency as the oscillation of the RDM, and its amplitude will be directly related to the angular rate about the SDM axis. Therefore, a signal proportional to the input angular rate can be obtained by properly demodulating the signal contained in $\theta_{SG}$ with a phase sensitive demodulator as shown in Fig. 10. This signal is independent of the acceleration environment.

THEORY OF AMPLITUDE OSCILLATING GYROSCOPE (AOG) OPERATION

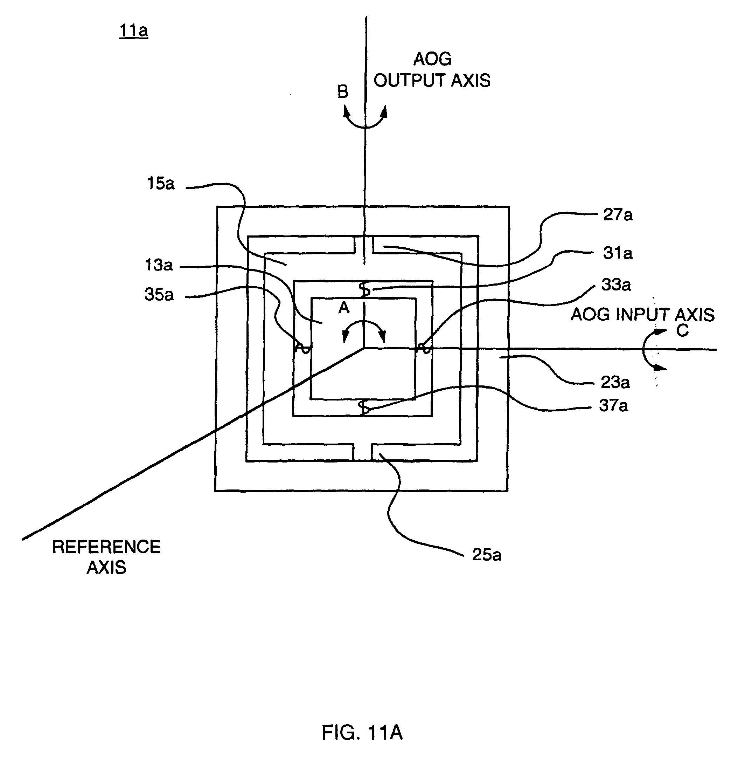

Fig. 11A represents a schematic embodiment of an Amplitude Oscillating Gyroscope (AOG), which is the Pendulous Oscillating Gyroscope of the POGA without the pendulum. This instrument is not an accelerometer. It is obtained by removing the SDM from the POGA and pivotally connecting the TSM to the case/housing directly. The pendulous mass is also removed, as otherwise the TSM will be deflected under acceleration, affecting its orthogonal alignment to the RDM and the case/housing.

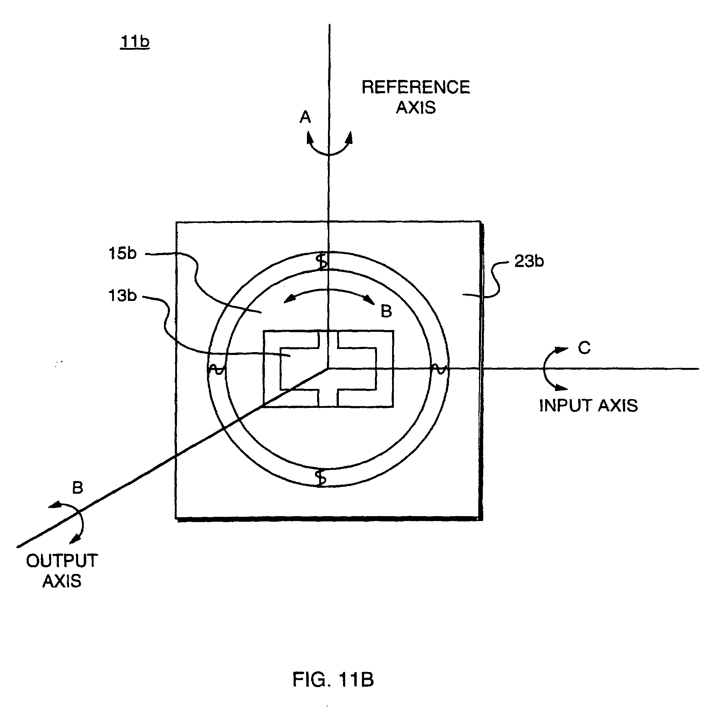

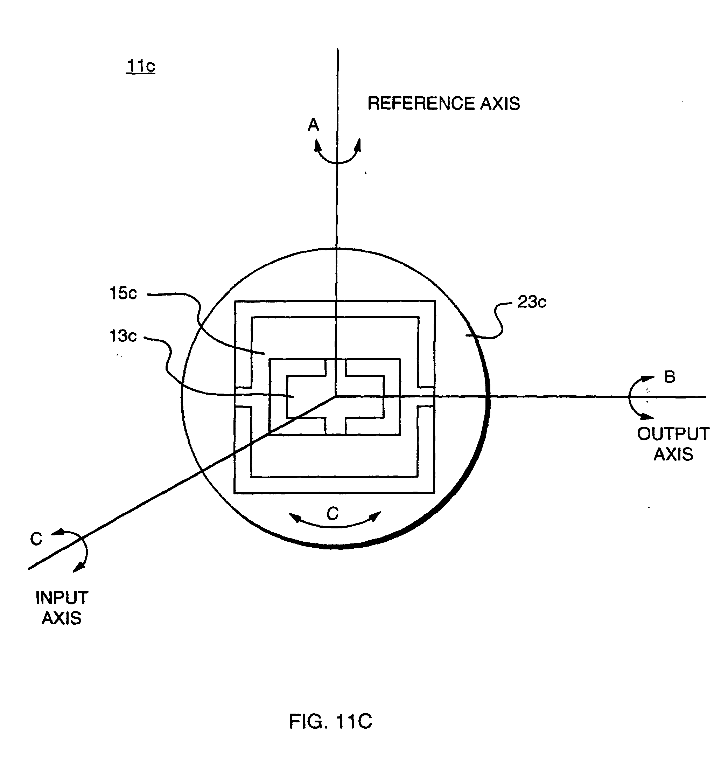

Shown in Fig. 11A is AOG 11a, which includes an RDM 13a that is oscillated about the reference axis as shown by arrow A. RDM 13a is pivotally mounted to TSM 15a by mounts 31a, 33a, 35a, 37a. These mounts are representative of the particular design shown. Other approaches are also possible. RDM 13a rides within TSM 15a which itself is pivotally mounted to case/housing 23a by mounts 25a and 27a that allow TSM 15a to rotate about the output axis as shown by arrow B. Under rotation about the AOG input axis by the vehicle or system to which case/housing 23a is mounted, TSM 15a oscillates at the same frequency as RDM 13a with an amplitude that is proportional to the rotation rate. Two other variations of the AOG are also possible that correspond to Figs. 2B and 2C. The AOG of Fig. 11A corresponds to the POGA of Fig. 2A. The AOGs of Figs. 11B and 11C correspond to Figs. 2B and 2C, respectively. In Figs. 11A through 11C, like parts are numbered alike.

Although planar schematics are shown, conventional three dimensional configurations could be used. Three dimensional designs could have members whose surfaces are in three orthogonal planes as opposed to one as shown.

Multisensor Operation

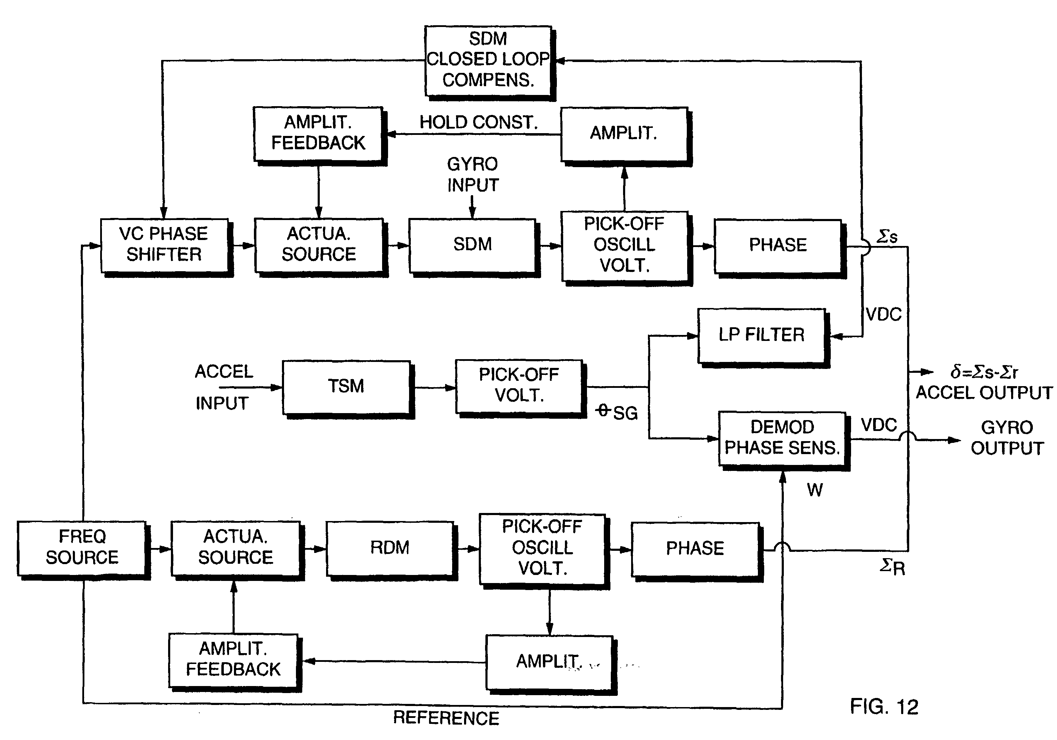

To describe the multi-sensor operation, in which both acceleration and rate information is obtained from the POGA, the POGA multisensor of Fig. 9 operated with phase feedback is used as an example. The description is according to Fig. 12. Phase feedback assumes that the SDM and RDM are driven by actuation sources. A common frequency input is provided to both. A Voltage Controlled Phase Shifter is also utilized prior to the SDM actuator source so that the SDM oscillation phase can be varied. The oscillations of the RDM and SDM are picked off and the resulting AC voltage signals are processed to obtain the peak amplitudes and phases of the signals. For the RDM and the SDM the amplitudes are fed back in control loops to the actuator sources to hold the amplitudes constant. Subject to input acceleration, the TSM deflects because of its pendulosity, and a pick-off DC voltage is generated. The voltage level is then compensated and fed back to the VC Phase Shifter of the SDM to change its phase so that the TSM is driven back to null. When this condition is met, the phase difference between the phases extracted is the acceleration output. Note that the phase difference is 90 degrees for zero acceleration input.

When the vehicle carrying the POGA rotates about the POGA SDM axis, the TSM develops an oscillation at the same frequency as the RDM. A demodulation of the TSM picked off signal, with the reference frequency provided by the frequency source, gives the amplitude of the signal, which is proportional to the gyro input rate. The signal amplitude is also proportional to the RDM oscillation amplitude, so it is necessary to maintain the RDM oscillation amplitude constant. The greater the RDM amplitude, the greater the sensitivity of the instrument. The stability of the scale factor is dependent on the stability of the oscillation amplitude.

In the case where both acceleration and rotational inputs are present, the TSM will contain a DC component due to the pendulosity, and an AC component due to the rotational input. The DC component is held at null by the control loop that varies the phase of the SDM. In order that the AC component is not controlled by the SDM loop, the TSM signal is split, and one half is low pass filtered to remove the oscillation component. The resulting DC signal is then used for the SDM loop for the accelerometer. The other half of the split signal is phase demodulated at the RDM oscillation frequency to extract the amplitude of the AC oscillation. This is proportional to the gyro input. The gyro signal is not maintained at null (zero oscillation amplitude). The purpose of gyros in a system is to align the accelerometers in inertial space. The nulling of the gyro is accomplished when the POGA is aligned by the system subject to the rotational input sensed by the POG. A system may comprise a gimbal platform that is maintained stable in inertial space so that as the vehicle rotates, the gyro senses the rotation and the system is counter-rotated to maintain the accelerometer pointed in the same direction, hence nulling the gyro.

For the POGs that correspond to Figs. 2B and 2C, the input axis is still the SDM axis. The POGs are the gyros in the POGAs. The POGA multisensor is more restrictive in the operability options. It is subject to the requirement of the POG gyros that the RDM oscillation amplitude be maintained constant. The reason is that the scale factor (proportionaliry) that relates the gyro input to the oscillation amplitude depends on the RDM amplitude. Phase feedback operation maintains the RDM oscillation amplitude constant. Amplitude feedback, where the SDM amplitude is the servoed quantity, also maintains RDM oscillation constant. If RDM oscillation amplitude is not held constant, the scale factor will change, which is undesirable. However, it could be possible to operate in this manner.

AOG Operation

Fig. 13 is the operational diagram for the Amplitude Oscillating Gyro (AOG) as shown in Figs. 11A, 11B and 11C. An actuator source provides the drive for the RDM. The frequency of the oscillation is set by the frequency source. A pick-off of the RDM oscillation amplitude is done to maintain the RDM oscillation amplitude constant. In the presence of rotation of the vehicle about the AOG input axis (case is attached to the vehicle), an oscillation is generated on the TSM and detected by a pick-off. The pick-off signal is then demodulated with a reference waveform obtained from the frequency source. The resulting DC value is proportional to gyro rate.

Although specific features of this invention are shown in some drawings and not others, this is for convenience only as each feature may be combined with any or all of the other features in accordance with the invention.

## POGA EQUATIONS

TSM EQUATION OF MOTION

$$\bar{L}=\left(\frac{d\bar{H}}{dt}\right)_I \tag{1}$$

$$\left(\frac{\overline{dH_f}}{dt}\right)_I = \left(\frac{\overline{dH_f}}{dt}\right)_f + \bar{\omega} \times \overline{H}_f = \overline{L}_f \tag{2}$$

$$\overline{H_f} = H_r\hat{s} + \bar{\bar{I}} \bullet \overline{\omega} \tag{3}$$

$$\left(\frac{dH_f}{dt}\right)_I = L_{fs}\hat{s} + L_{fi}\hat{i} + L_{fo}\hat{o} = \overline{L_f} \tag{4}$$

$$= \left[(\overline{\omega} \times H_f)_s + \frac{dH_{fs}}{dt}\right]\hat{s} + etc. \tag{5}$$

$$= \left[I_s\left(\ddot{\phi}_x + \vartheta\ddot{\phi}_y + \dot{\vartheta}\dot{\phi}_y\right) + \dot{H}_r + \left(\dot{\phi}_y - \vartheta\dot{\phi}_x\right)I_o\left(\dot{\phi}_z + \dot{\vartheta}\right) - \left(\dot{\phi}_z + \dot{\vartheta}\right)I_i\left(\dot{\phi}_y - \vartheta\dot{\phi}_x\right)\right]\hat{s}$$

$$+ \left[I_i\left(\ddot{\phi}_y - \vartheta\ddot{\phi}_x - \dot{\vartheta}\dot{\phi}_x\right) - \left(\dot{\phi}_x + \vartheta\dot{\phi}_y\right)I_o\left(\dot{\phi}_z + \dot{\vartheta}\right) + \left(\dot{\phi}_z + \dot{\vartheta}\right)\left\{I_s\left(\dot{\phi}_x + \vartheta\dot{\phi}_y\right) + H_r\right\}\right]\hat{i} \tag{6}$$

$$+ \left[I_o\left(\ddot{\phi}_z + \ddot{\vartheta}\right) + \left(\dot{\phi}_x + \vartheta\dot{\phi}_y\right)I_i\left(\dot{\phi}_y - \vartheta\dot{\phi}_x\right) - \left(\dot{\phi}_y - \vartheta\dot{\phi}_x\right)\left\{I_s\left(\dot{\phi}_x + \vartheta\dot{\phi}_y\right) + H_r\right\}\right]\hat{o}$$

$$L_{fo} = I_o\left(\ddot{\phi}_z + \ddot{\vartheta}\right) + \left(\dot{\phi}_x + \vartheta\dot{\phi}_y\right)I_i\left(\dot{\phi}_y - \vartheta\dot{\phi}_x\right) - \left(\dot{\phi}_y - \vartheta\dot{\phi}_x\right)\left\{I_s\left(\dot{\phi}_x + \vartheta\dot{\phi}_y\right) + H_r\right\}$$

$$= I_o\left(\ddot{\phi}_z + \ddot{\vartheta}\right) + \left(I_i - I_s\right)\left(\dot{\phi}_y - \vartheta\dot{\phi}_x\right)\left(\dot{\phi}_x + \vartheta\dot{\phi}_y\right) - \left(\dot{\phi}_y - \vartheta\dot{\phi}_x\right)H_r \tag{7}$$

$$L_{fo} = I_o\left(\ddot{\phi}_z + \ddot{\vartheta}\right) - \left(\dot{\phi}_y - \vartheta\dot{\phi}_x\right)H_r \tag{8}$$

$$L_{fo} = -D\dot{\vartheta} - K\vartheta + L_e - L_a \tag{9}$$

$$I_o\left(\ddot{\phi}_z + \ddot{\vartheta}\right) - \left(\dot{\phi}_y - \vartheta\dot{\phi}_x\right)H_r = -D\dot{\vartheta} - K\vartheta + L_e - L_a$$

or $\hspace{6cm} \tag{10}$

$$I_o\ddot{\vartheta} + D\dot{\vartheta} + K\vartheta = H_r\dot{\phi}_y - I_o\ddot{\phi}_z - H_r\vartheta\dot{\phi}_x + L_e - L_a$$

$$I_o\ddot{\vartheta} + D\dot{\vartheta} + K\vartheta = H_r\dot{\phi}_y - L_a \tag{11}$$

$$\phi_y = \tilde{\phi}_y\sin\left(\omega_y t + \delta\right) \quad \text{and} \quad \dot{\phi}_y = \omega_y\tilde{\phi}_y\cos\left(\omega_y t + \delta\right) \tag{12}$$

$$\phi_r = \tilde{\phi}_r\sin\omega_r t \text{ and } \quad \dot{\phi}_r = \omega_r\tilde{\phi}_r\cos\omega_r t \tag{13}$$

$$H_r = I_r\dot{\phi}_r = \omega_r\tilde{\phi}_r I_r\cos\omega_r t \tag{14}$$

$$\vartheta(t) = \frac{\frac{W}{2}\cos\delta - L_a}{I_o\left(e^2 + \omega_1^2\right)}$$

$$+ \frac{W}{2I_o\omega_1} A(\omega)\sin(2\omega t + \delta) + \frac{W}{2I_o\omega_1} B(\omega)\cos(2\omega t + \delta) \qquad (15)$$

$$\equiv \vartheta_{DC} + \vartheta_{AC}$$

$$L_a = \frac{W}{2}\cos\delta \quad \text{where } W = I_r\omega^2\tilde{\phi}_y\tilde{\phi}_r \qquad (16)$$

$$L_a = \frac{W}{2}\cos\delta = m_p R_p a \qquad (17)$$

$$a = \frac{I_r\omega^2\tilde{\phi}_y\tilde{\phi}_r}{2m_p R_p}\cos\delta \qquad \text{where } I_r = \frac{1}{2}m_r R_r^2 \qquad (18)$$

$$\vartheta_{DC} = \frac{I_r\omega^2\tilde{\phi}_y\tilde{\phi}_r}{2K}\cos\delta \qquad (19)$$

$$\vartheta_{DC} = \frac{m_p R_p}{I_r\omega_o^2} a \qquad (20)$$

ROTOR EQUATION OF MOTION

$$I_r\ddot{\phi}_r + D_r\dot{\phi}_r + K_r\phi_r = L_r \qquad (21)$$

$$\phi_r(t) = \tilde{\phi}_r\sin\left(\omega_r t - \varepsilon_r\right) \qquad (22)$$

$$\varepsilon_r = \tan^{-1}\left[\frac{D\omega}{I_r\left(\omega_{r1}^2 - \omega^2\right)}\right] \quad \text{where } \omega_{r1}^2 = \omega_{ro}^2 - e_r^2 \quad \text{and} \quad e_{r1}^2 = \frac{D_r}{2I_r} \quad (23)$$

$$\tilde{\phi}_r = \frac{\tilde{L}_r}{\left[D_r^2\omega^2 + I_r^2\left(\omega_{ro}^2 - \omega^2\right)^2\right]^{1/2}} \tag{24}$$

$$\tilde{L}_r = \left[D_r^2\omega^2 + I_r^2\left(\omega_{ro}^2 - \omega^2\right)^2\right]^{1/2}\tilde{\phi}_r \tag{25}$$

SDM EQUATION of MOTION

$$\left(I_i + J_y\right)\ddot{\phi}_y + D_y\dot{\phi}_y + K_y\phi_y = -L_y \tag{27}$$

$$\varepsilon_y = \tan^{-1}\left[\frac{D_y\omega}{\left(I_i + J_y\right)\left(\omega_{y1}^2 - \omega^2\right)}\right] \text{ where } \omega_{y1}^2 = \omega_{yo}^2 - e_y^2 \tag{28}$$

$$e_y^2 = \frac{D_y}{2\left(I_i + J_y\right)} \tag{29}$$

$$\tilde{\phi}_y = \frac{\tilde{L}_y}{\left[D_y^2\omega^2 + \left(I_i + J_y\right)^2\left(\omega_{yo}^2 - \omega^2\right)^2\right]^{1/2}} \tag{30}$$

$$\tilde{L}_y = \left[D_y^2\omega^2 + \left(I_i + J_y\right)^2\left(\omega_{yo}^2 - \omega^2\right)^2\right]^{1/2}\tilde{\phi}_y \tag{31}$$

SCALE FACTORS

$$a = \left[\frac{I_r\omega^2}{2m_pR_p}\tilde{\phi}_r\cos(\delta)\right]\tilde{\phi}_y \tag{32}$$

$$a = \frac{I_r \omega^2 \tilde{\phi}_y \tilde{\phi}_r}{2 m_p R_p} \cos(\varepsilon_r - \varepsilon_y) \quad \text{where} \quad \delta = \varepsilon_r - \varepsilon_y \tag{33}$$

$$a = \left[ \frac{I_r}{2 m_p R_p} \tilde{\phi}_y \tilde{\phi}_r \cos(\varepsilon_r - \varepsilon_y) \right] \omega^2 \tag{34a}$$

$$a = \frac{I_r \omega^2 \tilde{\phi}_y(\omega) \tilde{\phi}_r(\omega)}{2 m_p R_p} \cos(\varepsilon_r(\omega) - \varepsilon_y(\omega)) \tag{34b}$$

**Claims**

1. A generally planar gyroscopic device (11b) of the type having a fixed case (23b); a torque summing member (15b) coupled to the case (23b) and adapted for rotation about an output axis (B); a rotor driven member (13b) mounted to the torque summing member (15b) for sinusoidal oscillation about a reference axis (A) that is orthogonal to the output axis (B); first oscillation means for oscillating the rotor driven member (13b) about the reference axis (A), the oscillation having a first phase, a first amplitude, and a first frequency; measurement means for determining the rotational motion of the torque summing member (15b) about the output axis (B) caused by the rotation of the device (11b) about an input axis (C) that is orthogonal to both the output axis (B) and the reference axis (A); and means, responsive to the measurement means, for determining rotation of the device 11b) about the input axis (C), the device **characterized by** the torque summing member (15b) and the rotor driven member (13b) both being generally planar and lying generally in a plane, and the torque summing member (15b) being mounted to the case (23b) such that the output axis (B) is normal to the plane defined by the reference (A) and input (C) axes.

2. The generally planar gyroscopic device of claim 1 wherein the rotor driven member (13b) is pivotably mounted within the torque summing member (15b), to pivot about the reference axis (A).

3. The generally planar gyroscopic device of any preceding claim wherein the torque summing member (15b) is mounted by a plurality of spaced flexures to the fixed case (23b), and the output axis (B) is normal to the torque summing member (15b), whereby the torque summing member (15b) pivots within its plane about the output axis (B).

4. The generally planar gyroscopic device of any preceding claim wherein the means for determining rotation is further responsive to the oscillation means.

5. The generally planar gyroscopic device of any preceding claim wherein the means for determining rotation includes a phase-sensitive demodulator for producing a signal related to the angular rate of rotation of the device (11b) about the input axis (C).

6. The generally planar gyroscopic device of any preceding claim further comprising control means for altering the oscillation means to maintain the rotor driven member (13b) oscillation amplitude constant.

7. The generally planar gyroscopic device of any preceding claim further comprising a generally planar servo driven member (16b) mounted to the case (22b) for sinusoidal oscillation about an accelerometer servo axis (C), wherein the torque summing member (14b) is mounted to the servo driven member (16b).

8. The generally planar gyroscopic device of any preceding claim further comprising a pendulosity (28b) eanied by at least one of the torque summing member (14b) and the rotor driven member (12b), to create a mass imbalance about the output axis (B), in which pendulosity torque due to acceleration along the accelerometer input axis (A) causes a DC rotation of the torque summing member (14b) about the output axis (B).

9. The generally planar gyroscopic device of any preceding claim further comprising second oscillation means for sinusoidally oscillating the servo driven member (16b) about the servo axis (C), the oscillation having a second amplitude, a second frequency, and a second phase.

10. The generally planar gyroscopic device of any preceding claim further comprising control means, responsive to the measurement means, for altering the oscillation caused by at least one of the first and second oscillation means, to create a change in the gyroscopic torque, to counterbalance pendulosity torque.

11. The generally planar gyroscopic device of any preceding claim further comprising means, responsive to the control means, for determining acceleration of the device along the accelerometer input axis (A).

12. The generally planar gyroscopic device of any preceding claim wherein the servo driven member (16b) surrounds the torque summing member (14b), and is pivotably mounted to the case (22b) to pivot about the servo axis (C).

13. The generally planar gyroscopic device of any preceding claim wherein DC rotation of the fixed case (22b) about the gyroscopic input axis (C) creates a gyroscopic torque, which causes in part an AC oscillation of the torque summing member (14b) about the output axis (B).

14. The generally planar gyroscopic device of any preceding claim wherein the servo driven member (16b), the torque summing member (14b) and the rotor driven member (12b) are three-dimensional members.

15. The generally planar gyroscopic device of any preceding claim wherein the first frequency and second frequency are the same.

16. The generally planar gyroscopic device of any preceding claim wherein the phase difference between the oscillations of the rotor driven member (12b) and the servo driven member (16b) is constant, and the control means alters at least one of the first and second amplitudes.

17. The generally planar gyroscopic device of any preceding claim wherein the control means maintains the first and second amplitudes constant and alters the phase difference between the first phase and the second phase.

18. The generally planar gyroscopic device of any preceding claim wherein the control means maintains the first and second amplitudes constant, maintains the phase difference between the first phase and the second phase constant, and alters both the first and second frequencies together.

19. The generally planar gyroscopic device of any preceding claim wherein the servo driven member (16b) and the rotor driven member (12b) are both oscillated at resonance.

20. The generally planar gyroscopic device of any preceding claim wherein the first and second oscillation means are selected from the group consisting of electromagnetic drives and electrostatic drives.

21. The generally planar gyroscopic device of any preceding claim wherein the measurement means is a non-contact measurement device selected from the group consisting of capacitive, electromagnetic and optical measurement devices.

**Patentansprüche**

1. Insgesamt ebene Kreiselvorrichtung (11b) der Art mit einem feststehenden Gehäuse (23b); einem drehmomentaddierenden Element (15b), das mit dem Gehäuse (23b) verbunden ist und sich um eine Ausgangsachse (B) drehen kann; einem rotorangetriebenen Element (13b), das an dem drehmomentaddierenden Element (15b) für eine Sinusschwingung um eine zu der Ausgangsachse (B) orthogonale Bezugsachse (A) angebracht ist; einer ersten Schwingeinrichtung, um das rotorangetriebene Element (13b) um die Bezugsachse (A) in Schwingung zu versetzen, wobei die Schwingung eine erste Phase, eine erste Amplitude und eine erste Frequenz hat; einer Messeinrichtung zum Ermitteln der Drehbewegung des drehmomentaddierenden Elements (15b) um die Ausgangsachse (B), die durch die Drehung der Vorrichtung (11b) um eine Eingangsachse (C) verursacht wurde, die sowohl zu der Ausgangsachse (B) als auch zu der Bezugsachse (A) orthogonal ist; und mit einer auf die Messeinrichtung ansprechenden Einrichtung zum Ermitteln der Drehung der Vorrichtung (11b) um die Eingangsachse (C), wobei die Vorrichtung **dadurch gekennzeichnet ist, dass** das drehmomentaddierende Element (15b) und das rotorangetriebene Element (13b) beide insgesamt eben sind und insgesamt in einer Ebene liegen, und dass das drehmomentaddierende Element (15b) so an dem Gehäuse (23b) angebracht ist, dass die Ausgangsachse (B) senkrecht ist zu der durch die Bezugsachse (A) und die Eingangsachse (C) gebildeten Ebene.

2. Insgesamt ebene Kreiselvorrichtung nach Anspruch 1, bei der das rotorangetriebene Element (13b) in dem drehmomentaddierenden Element (15b) drehbar gelagert ist, um sich um die Bezugsachse (A) zu drehen.

3. Insgesamt ebene Kreiselvorrichtung nach einem der vorhergehenden Ansprüche, bei der das drehmomentaddierende Element (15b) durch mehrere voneinander beabstandete Flexuren an dem feststehenden Gehäuse (23b) befestigt ist und die Ausgangsachse (B) zu dem drehmomentaddierenden Element (15b) senkrecht ist, wodurch sich das drehmomentaddierende Element (15b) in seiner Ebene um die Ausgangsachse (B) dreht.

4. Insgesamt ebene Kreiselvorrichtung nach einem der vorhergehenden Ansprüche, bei der die Einrichtung zum Ermitteln der Drehung ferner auf die Schwingeinrichtung anspricht.

5. Insgesamt ebene Kreiselvorrichtung nach einem der vorhergehenden Ansprüche, bei der die Einrichtung zum Ermitteln der Drehung einen phasenempfindlichen Demodulator zum Erzeugen eines Signals für die Winkelgeschwindigkeit der Drehung der Vorrichtung (11b) um die Eingangsachse (C) aufweist.

6. Insgesamt ebene Kreiselvorrichtung nach einem der vorhergehenden Ansprüche, ferner mit einer Steuereinrichtung, die die Schwingeinrichtung ändert, um die Schwingungsamplitude des rotorangetriebenen Elements (13b) konstant zu halten.

7. Insgesamt ebene Kreiselvorrichtung nach einem der vorhergehenden Ansprüche, ferner mit einem insgesamt ebenen servoangetriebenen Element (16b), das an dem Gehäuse (22b) für eine Sinusschwingung um eine Servoachse (C) eines Beschleunigungsmessers angebracht ist, wobei das drehmomentaddierende Element (14b) an dem servoangetriebenen Element (16b) angebracht ist.

8. Insgesamt ebene Kreiselvorrichtung nach einem der vorhergehenden Ansprüche, ferner mit einem mindestens von dem drehmomentaddierenden Element (14b) oder dem rotorangetriebenen Element (12b) getragenen Pendel (28b), um ein Massenungleichgewicht um die Ausgangsachse (B) zu erzeugen, wobei das Pendeldrehmoment infolge der Beschleunigung längs der Eingangsachse (A) des Beschleunigungsmessers eine Gleichstromrotation des drehmomentaddierenden Elements (14b) um die Ausgangsachse (B) verursacht.

9. Insgesamt ebene Kreiselvorrichtung nach einem der vorhergehenden Ansprüche, ferner mit einer zweiten Schwingeinrichtung, die das servoangetriebene Element (16b) in eine Sinusschwingung um die Servoachse (C) versetzt, wobei die Schwingung eine zweite Amplitude, eine zweite Frequenz und eine zweite Phase hat.

10. Insgesamt ebene Kreiselvorrichtung nach einem der vorhergehenden Ansprüche, ferner mit einer auf die Messeinrichtung ansprechenden Steuereinrichtung, die die von mindestens der ersten oder der zweiten Schwingeinrichtung verursachte Schwingung ändert, um eine Änderung im Kreiseldrehmoment zu erzeugen und so das Pendeldrehmoment auszugleichen.

11. Insgesamt ebene Kreiselvorrichtung nach einem der vorhergehenden Ansprüche, ferner mit einer auf die Steuereinrichtung ansprechenden Einrichtung zum Ermitteln der Beschleunigung der Vorrichtung längs der Eingangsachse (A) des Beschleunigungsmessers.

12. Insgesamt ebene Kreiselvorrichtung nach einem der vorhergehenden Ansprüche, bei der das servoangetriebene Element (16b) das drehmomentaddierende Element (14b) umgibt und auf dem Gehäuse (22b) drehbar gelagert ist, um sich um die Servoachse (C) zu drehen.

13. Insgesamt ebene Kreiselvorrichtung nach einem der vorhergehenden Ansprüche, bei der die Gleichstromrotation des festen Gehäuses (22b) um die Eingangskreiselachse (C) ein Kreiseldrehmoment erzeugt, das zum Teil eine Wechselstromschwingung des drehmomentaddierenden Elements (14b) um die Ausgangsachse (B) verursacht.

14. Insgesamt ebene Kreiselvorrichtung nach einem der vorhergehenden Ansprüche, bei der das servoangetriebene Element (16b), das drehmomentaddierende Element (14b) und das rotorangetriebene Element (12b) dreidimensionale Elemente sind.

15. Insgesamt ebene Kreiselvorrichtung nach einem der vorhergehenden Ansprüche, bei der die erste Frequenz und die zweite Frequenz gleich sind.

16. Insgesamt ebene Kreiselvorrichtung nach einem der vorhergehenden Ansprüche, bei der die Phasendifferenz zwischen den Schwingungen des rotorangetriebenen Elements (12b) und des servoangetriebenen Elements (16b) konstant ist und die Steuereinrichtung mindestens die erste oder die zweite Amplitude ändert.

17. Insgesamt ebene Kreiselvorrichtung nach einem der vorhergehenden Ansprüche, bei der die Steuereinrichtung die erste und die zweite Amplitude konstant hält und die Phasendifferenz zwischen der ersten Phase und der zweiten Phase ändert.

18. Insgesamt ebene Kreiselvorrichtung nach einem der vorhergehenden Ansprüche, bei der die Steuereinrichtung die erste und die zweite Amplitude konstant hält, die Phasendifferenz zwischen der ersten Phase und der zweiten Phase konstant hält und die erste und die zweite Frequenz zusammen ändert.

19. Insgesamt ebene Kreiselvorrichtung nach einem der vorhergehenden Ansprüche, bei der das servoangetriebene Element (16b) und das rotorangetriebene Element (12b) beide in Resonanz schwingen.

20. Insgesamt ebene Kreiselvorrichtung nach einem der vorhergehenden Ansprüche, bei der die erste und die zweite Schwingeinrichtung ausgewählt sind aus der aus elektromagnetischen Antrieben und elektrostatischen Antrieben bestehenden Gruppe.

21. Insgesamt ebene Kreiselvorrichtung nach einem der vorhergehenden Ansprüche, bei der die Messeinrichtung ein berührungsloses Messgerät ist, das ausgewählt ist aus der aus kapazitiven, elektromagnetischen und optischen Messgeräten bestehenden Gruppe.

**Revendications**

1. Dispositif gyroscopique (11b) globalement plan, du type qui présente un boîtier fixe (23b), un élément (15b) d'addition de couple couplé au boîtier (23b) et adapté de manière à tourner autour d'un axe de sortie (B), un élément (13b) entraîné par rotor et monté sur l'élément (15b) d'addition de couple de manière à osciller de manière sinusoïdale autour d'un axe de référence (A) qui est perpendiculaire à l'axe de sortie (B), un premier moyen d'oscillation qui fait osciller autour de l'axe de référence (A) l'élément (13b) entraîné par rotor, l'oscillation présentant une première phase, une première amplitude et une première fréquence, un moyen de mesure pour déterminer le déplacement de rotation de l'élément (15b) d'addition de couple autour de l'axe de sortie (B) entraîné par la rotation du dispositif (11 b) autour d'un axe d'entrée (C) qui est perpendiculaire à l'axe de sortie (B) et à l'axe de référence (A) et un moyen qui réagit au moyen de mesure de manière à déterminer la rotation du dispositif (11 b) autour de l'axe d'entrée (C),

le dispositif **caractérisé par** l'élément (15b) d'addition de couple et l'élément (13b) entraîné par rotor étant tous deux globalement plans et étant situés globalement dans un plan et l'élément (15b) d'addition de couple étant monté sur le boîtier (23b) de telle sorte que son axe de sortie (B) soit perpendiculaire au plan défini par l'axe de référence (A) et l'axe d'entrée (C).

2. Dispositif gyroscopique globalement plan selon la revendication 1, dans lequel l'élément (13b) entraîné par rotor est monté de manière pivotante dans l'élément (15b) d'addition de couple de manière à pouvoir pivoter autour de l'axe de référence (A).

3. Dispositif gyroscopique globalement plan selon l'une quelconque des revendications précédentes, dans lequel l'élément (15b) d'addition de couple est monté sur le boîtier fixe (23b) à l'aide de plusieurs bandes souples disposées à distance les unes des autres, l'axe de sortie (B) étant perpendiculaire à l'élément (15b) d'addition de couple et l'élément (15b) d'addition de couple pivotant dans son plan autour de l'axe de sortie (B).

**4.** Dispositif gyroscopique globalement plan selon l'une quelconque des revendications précédentes, dans lequel le moyen pour déterminer la rotation réagit en outre au moyen d'oscillation.

**5.** Dispositif gyroscopique globalement plan selon l'une quelconque des revendications précédentes, dans lequel le moyen pour déterminer la rotation comprend un démodulateur sensible à la phase qui délivre un signal associé à la vitesse angulaire de rotation du dispositif (11 b) autour de l'axe d'entrée (C).

**6.** Dispositif gyroscopique globalement plan selon l'une quelconque des revendications précédentes, qui comprend en outre un moyen de commande qui modifie le moyen d'oscillation de manière à maintenir constante l'amplitude d'oscillation de l'élément (13b) entraîné par rotor.

**7.** Dispositif gyroscopique globalement plan selon l'une quelconque des revendications précédentes, qui comprend en outre un élément (16b) globalement plan entraîné par servomoteur et monté sur le boîtier (22b) de manière à osciller de manière sinusoïdale autour d'un axe (C) de servomoteur d'accéléromètre, l'élément (14b) d'addition de couple étant monté sur l'élément (16b) entraîné par servomoteur.

**8.** Dispositif gyroscopique globalement plan selon l'une quelconque des revendications précédentes, qui comprend en outre un moyen pendulaire (28b) qui est soutenu par au moins l'un parmi l'élément (14b) d'addition de couple et l'élément (12b) entraîné par rotor et qui crée un déséquilibre de masse autour de l'axe de sortie (B), le couple pendulaire dû à l'accélération le long de l'axe d'entrée (A) d'accéléromètre entraînant une rotation continue de l'élément (14b) d'addition de couple autour de l'axe de sortie (B).

**9.** Dispositif gyroscopique globalement plan selon l'une quelconque des revendications précédentes, qui comprend en outre un deuxième moyen d'oscillation qui fait osciller de manière sinusoïdale autour de l'axe (C) du servomoteur l'élément (16b) entraîné par servomoteur, l'oscillation présentant une deuxième amplitude, une deuxième fréquence et une deuxième phase.

**10.** Dispositif gyroscopique globalement plan selon l'une quelconque des revendications précédentes, qui comprend en outre un moyen de commande qui réagit au moyen de mesure de manière à modifier l'oscillation entraînée par au moins l'un parmi le premier moyen d'oscillation et le deuxième moyen d'oscillation de manière à créer un changement du couple gyroscopique qui équilibre le couple pendulaire.

**11.** Dispositif gyroscopique globalement plan selon l'une quelconque des revendications précédentes, qui comprend en outre un moyen qui réagit au moyen de commande de manière à déterminer l'accélération du dispositif le long de l'axe d'entrée (A) de l'accéléromètre.

**12.** Dispositif gyroscopique globalement plan selon l'une quelconque des revendications précédentes, dans lequel l'élément (16b) entraîné par servomoteur entoure l'élément (14b) d'addition de couple et est monté à pivotement sur le boîtier (22b) de manière à pivoter autour de l'axe (C) du servomoteur.

**13.** Dispositif gyroscopique globalement plan selon l'une quelconque des revendications précédentes, dans lequel la rotation continue du boîtier fixe (22b) autour de l'axe d'entrée gyroscopique (C) crée un couple gyroscopique qui entraîne en partie une oscillation alternée dé l'élément (14b) d'addition de couple autour de l'axe de sortie (B).

**14.** Dispositif gyroscopique globalement plan selon l'une quelconque des revendications précédentes, dans lequel l'élément (16b) entraîné par servomoteur, l'élément (14b) d'addition de couple et l'élément (12b) entraîné par rotor sont des éléments en trois dimensions.

**15.** Dispositif gyroscopique globalement plan selon l'une quelconque des revendications précédentes, dans lequel la première fréquence et la deuxième fréquence sont identiques.

**16.** Dispositif gyroscopique globalement plan selon l'une quelconque des revendications précédentes, dans lequel la différence de phase entre les oscillations de l'élément (12b) entraîné par rotor et celles de l'élément (16b) entraîné par servomoteur est constante, le moyen de commande modifiant au moins l'une parmi la première amplitude et la deuxième amplitude.

**17.** Dispositif gyroscopique globalement plan selon l'une quelconque des revendications précédentes, dans lequel le moyen de commande maintient constantes la première amplitude et la deuxième amplitude et modifie la différence de phase entre la première phase et la deuxième phase.

18. Dispositif gyroscopique globalement plan selon l'une quelconque des revendications précédentes, dans lequel le moyen de commande maintient constantes la première amplitude et la deuxième amplitude, maintient constante la différence de phase entre la première phase et la deuxième phase et modifie ensemble la première fréquence et la deuxième fréquence.

19. Dispositif gyroscopique globalement plan selon l'une quelconque des revendications précédentes, dans lequel l'élément (16b) entraîné par servomoteur et l'élément (12b) entraîné par rotor oscillent tous deux en résonance.

20. Dispositif gyroscopique globalement plan selon l'une quelconque des revendications précédentes, dans lequel le premier moyen d'oscillation et le deuxième moyen d'oscillation sont sélectionnés dans l'ensemble constitué d'entraînements électromagnétiques et d'entraînements électrostatiques.

21. Dispositif gyroscopique globalement plan selon l'une quelconque des revendications précédentes, dans lequel le moyen de mesure est un dispositif de mesure sans contact sélectionné dans l'ensemble constitué de dispositifs capacitifs, de dispositifs électromagnétiques et de dispositifs de mesure optique.

FIG. 1

10a

OUTPUT AXIS

B

36a
12a
28a
24a
30a

18a
14a
34a
26a

C

SDM
SERVO
AXIS

32a
22a
16a

A

R

T

S

ā

INPUT AXIS
REFERENCE
AXIS

20a

FIG. 2A

FIG. 2B

FIG. 2C

FIG. 3

4.6
4.5
4.4
4.3
4.2
4.1
4.2
4.3
4.4
4.5
4.6

TA

CASE

SDM FLEXURES

TSM FLEXURES

RDM FLEXURES

SDM

TSM

RA

PACKAGE

RDM

THRU OPENING
FOR TSM
MASS IMBALANCE

MECHANICAL LAYER

FIG. 4A

SDM SPACER PLATE

TSM SPACER PLATE

TSM TANGS

SDM TANGS

PACKAGE

FIG. 4B

FIG. 4C

FIG. 4D

SDM TANGS

PACKAGE

SDM PLATE

FIG. 4E

FIG. 4F

FIG. 4G

FIG. 4H

FIG. 4I

FIG. 5

EP 0 858 584 B1

FIG. 6

FIG. 7

EP 0 858 584 B1

FIG. 8

FIG. 9

PHASE SENSITIVE DEMODULATOR

SG

OUTPUT

FIG. 10

GYRO INPUT

CASE

TSM

PICK-OFF OSCILL. VOLT.

DEMOD

VDC

OUTPUT

REFERENCE

FREQ SOURCE

ACTUA. SOURCE

RDM

PICK-OFF OSCILL VOLT.

AMPLIT. FEEDBACK

HOLD CONST.

AMPLIT.

FIG. 13

EP 0 858 584 B1

11a

AOG
OUTPUT AXIS

B

15a

27a

31a

13a

35a

A

33a

AOG INPUT AXIS

C

23a

37a

25a

REFERENCE
AXIS

FIG. 11A

FIG. 11B

FIG. 11C

FIG. 12